# EUROPEAN PATENT SPECIFICATION

(11) **EP 1 845 484 B1**
(45) Date of publication and mention of the grant of the patent: **14.12.2011**
(21) Application number: 07007607.0
(22) Date of filing: 13.04.2007
(51) Int. Cl.: G06K 19/077

(54) **RFID label, tag tape roll, tag tape cartridge**
RFID-Etikett, Tag-Bandrolle, Tagband-Kassette
Étiquette RFID, rouleau de bande d'étiquette, cartouche de rouleau de bande d'étiquette

(30) Priority: 13.04.2006 JP 2006111247
(43) Date of publication of application: 17.10.2007
(73) Proprietor: Brother Kogyo Kabushiki Kaisha, Nagoya-shi, Aichi-ken 467-8561 (JP)
(72) Inventor: Nagae, Tsuyoshi, Nagoya-shi Aichi, 467-8561 (JP); Kato, Shigeki, Nagoya-shi Aichi, 467-8561 (JP)
(74) Representative: Hofer, Dorothea

(56) References cited:
- EP-A- 1 626 362
- EP-A1- 1 018 703
- EP-A1- 1 808 801
- WO-A-2006/016607

## Description

### TECHNICAL FIELD

The present invention is related to an RFID label having an RFID circuit element for storing information, tag tape roll provided with the RFID circuit element, and an RFID circuit element cartridge provided with this tag tape roll.

### BACKGROUND ART

RFID (Radio Frequency Identification) systems for transmitting/receiving information in a non-contact manner (electromagnetic coupling method using a coil, an electromagnetic induction method, an electric wave method or the like) with an RFID circuit element for storing information are known in the field.

A tag label producing apparatus for producing an RFID label for transmitting/receiving information to/from this RFID circuit element as described in JP, A, 2004-333651 is known, for instance. In this type of tag label producing apparatus, a tag tape (band-state tape) on which the RFID circuit elements (antenna portion, IC chip) are arranged with a substantially equal interval in the tape longitudinal direction is wound around a supply spool in the roll shape. This tag tape is made in a laminated structure of a plurality of layers including a bonding adhesive layer (second adhesive layer) for bonding the tag tape to a print-receiving tape layer, a base tape layer (base material), a affixing adhesive layer for affixing the produced tag label to an adhesion target, and a separation material layer detached when affixing the tag label in the order from outside of the supply spool in the radial direction, and the RFID circuit element is provided between the tape base layer and the affixing adhesive layer.

When the tag tape constructed as above is supplied from the roll around the supply spool and made to adhere to the print-receiving tape layer (laminate tape) on which desired printing is applied through the bonding adhesive layer, the tag label tape with print is formed. And RFID tag information is written into the RFID circuit element provided at this tag label tape with print, and by cutting the tag label tape with print into a desired length, the RFID label with print is continuously produced. Upon use of the tag label produced in this way, the separation material layer is detached to expose the affixing adhesive layer and the entire label is stuck to the adhesion target by its adhesive force.

Document EP 1 626 362 A1, by Applicant, discloses a radio identification label having an IC-chip associated with an antenna conductor, which is disposed between a first adhesive layer and an opaque base material tape. A separation member and a laminate tape to be applied with ink printing are also shown therein.

Document WO 2006/016607 A1, by Applicant, discloses a label tape including a cover film, an adhesive layer, a base film, an IC circuit with antenna base, an adhesive layer and a separation sheet.

Document EP 1 018 703 A1 discloses a laminate label tape including RFID-transponders.

Document EP 1 808 801 A1 is prior art under Art. 54(3) EPC. It discloses a cover film on one surface side and a separation sheet on the other surface side of the tape, and a tag having an antenna base is arranged in a middle section. Further, there is provided an adhesive layer directly on the cover film side of the antenna base and an adhesive layer directly on the separation sheet side of the antenna base.

### DISCLOSURE OF THE INVENTION

### Problem to be Solved by the Invention

When the tag tape is constructed as in the above prior art to have the roll shape, if the laminate structure gets thick, a wrinkle is easily generated by a difference between the inner and the outer circumferences in the wound state in the roll shape. If this wrinkle is generated, printed contents become illegible in a printed area of the print-receiving tape layer, which lowers visibility.

An object of the present invention is to provide an RFID label which can prevent lowering of visibility of printed contents due to generation of a wrinkle, a tag tape roll for producing it and an RFID circuit element cartridge.

### Means for Solving the Problem

In order to achieve the above object, a first aspect of the invention is an RFID label comprising the features according to claim 1.

When the RFID label with printing is constructed using the tag tape in the laminate structure including a substantially sheet-state antenna base provided with the RFID circuit element, the print-receiving tape layer provided on the front side in the thickness direction in the laminate structure and on which predetermined printing is applied and the antenna base provided at the intermediate portion in the thickness direction are required, and at least one adhesive layer is separately needed in order to bond the antenna base and the print-receiving tape layer or affixing the entire label to the adhesion target. However, the more these adhesive layers are provided, the larger the dimension in the thickness direction in the entire label is increased, and a wrinkle is easily generated by a difference between the inner and the outer circumferences when the tag tape is wound in the roll shape, for example.

In the first aspect of the present invention, the adhesive layer for antenna base is not provided adjacently to both sides of the antenna base in the label thickness direction (both the print-receiving tape side and the separation material layer side), but it is provided adjacently only to either one of them. As a result, the dimension of the entire label (tape) in the thickness direction can be reduced as compared with the provision adjacent to both sides. As a result, generation of the wrinkle is restrained, illegibility of the printed contents in the printed area due to the wrinkle is prevented, and visibility can be improved. Also, the adhesive layers protruding from the outer edge portions in the width direction are prevented from contacting and adhering to each other as in the case of provision of two or more adhesive layers.

In the laminate structure including the print-receiving tape layer, the bonding adhesive layer, the first intermediate base layer, the antenna base, the second intermediate base layer, the affixing adhesive layer, and the separation material layer in the order from the label front side to the back side, the adhesive layer for antenna base is provided between the first intermediate base layer and the antenna base, or between the antenna base and the second intermediate base layer. When the adhesive layer for antenna base is provided between the first intermediate base layer and the antenna base, the antenna base can be mounted to the first intermediate base layer through the adhesive layer for antenna base (functioning as the fixation adhesive layer), and the first intermediate base layer and the second intermediate base layer can be bonded together by a portion located outside the antenna base in the adhesive layer for antenna base (functioning as the bonding adhesive layer). When the adhesive layer for antenna base is provided between the antenna base and the second intermediate base layer, the antenna base can be mounted to the second intermediate base layer through the adhesive layer for antenna base (functioning as the fixation adhesive layer), and the first intermediate base layer and the second intermediate base layer can be bonded together by a portion located outside the antenna base in the adhesive layer for antenna base (functioning as an adhesive layer for bonding the base material) .

According to an embodiment of the second invention, the print-receiving tape layer has predetermined printing on the surface of the antenna base side.

In the printed area formed by mirror-image printing from the antenna base side (back side) of the print-receiving tape layer, illegibility of the printed contents is prevented and visibility can be improved.

According to another embodiment, the print-receiving tape layer has predetermined printing on the surface opposite to the antenna base side.

In the printed area formed by normal-image printing from the side opposite to the antenna base (front side) of the print-receiving tape layer, illegibility of the printed contents is prevented and visibility can be improved.

When the RFID label with printing is constructed using the tag tape in the laminate structure including the substantially sheet-state antenna base provided with the RFID circuit element, the print-receiving tape layer provided on the front side in the thickness direction in the laminate structure and on which the predetermined printing is applied and the antenna base provided at the intermediate portion in the thickness direction are required, and at least an adhesive layers is needed to bond the antenna base and the print-receiving tape layer or affixing the entire label to the adhesion target. However, the more the laminated structure is provided, the larger the dimension in the thickness direction in the entire label is increased, and a wrinkle is easily generated by a difference between the inner and the outer circumferences when the tag tape is wound in the roll shape, for example.

In the embodiment of the invention, such adhesive layer is a non-application type adhesive layer not requiring an adhesive base to which the adhesive is applied. In this type of adhesive layer, the dimension in the thickness direction is reduced by absence of the adhesive base as compared with a normal adhesive layer in which an adhesive is applied to the adhesive base, and the dimension of the entire label (tape) in the thickness direction can be reduced. As a result, the generation of wrinkles can be restricted, illegibility of the printed contents is prevented and visibility can be improved.

In order to achieve the above object, a second aspect of the invention is a tag tape roll according to claim 4.

When the RFID label with printing is constructed using the tag tape in the laminate structure including the substantially sheet-state antenna base provided with the RFID circuit element, the print-receiving tape layer provided on the front side in the thickness direction in the laminate structure and on which the predetermined printing is applied and the antenna base provided at the intermediate portion in the thickness direction are required, and at least one adhesive layer is separately needed to bond the antenna base and the print-receiving tape layer or affixing the entire label to the adhesion target. However, the more the laminated structure is provided, the larger the dimension in the thickness direction in the entire label is increased, and a wrinkle is easily generated by a difference between the inner and the outer circumferences when the tag tape is wound in the roll shape to have the tag tape roll, for example.

In the invention, the adhesive layer for antenna base is not provided adjacently to both sides of the antenna base in the label thickness direction (the print-receiving tape side or the bonding adhesive layer side and the separation material layer side) but provided adjacently only to one side. As a result, the dimension of the entire label (tape) in the thickness direction can be reduced as compared with the case of provision adjacent to the both sides. As a result, the generation of wrinkles can be restricted, illegibility of the printed contents is prevented and visibility can be improved. Also, the adhesive layers protruding from the outer edge portions in the width direction are prevented from contacting and adhering to each other as in the case of provision of two or more adhesive layers.

In order to achieve the above object, a third aspect of the invention is an RFID circuit element cartridge according to claim 5 comprising a tag tape roll according to claim 4.

When the RFID label with printing is constructed using the tag tape in the laminate structure including the substantially sheet-state antenna base provided with the RFID circuit element, the print-receiving tape layer provided on the front side in the thickness direction in the laminate structure and on which the predetermined printing is applied and the antenna base provided at the intermediate portion in the thickness direction are required, and at least one adhesive layer is separately needed to bond the antenna base and the print-receiving tape layer or affixing the entire label to the adhesion target. However, the more the adhesive layers are provided, the larger the dimension in the thickness direction in the entire label is increased, and a wrinkle is easily generated by a difference between the inner and the outer circumferences when the tag tape is wound in the roll shape to have the tag tape roll at arrangement in the RFID circuit element cartridge.

In the invention, the adhesive layer for antenna base is not provided adjacently to both sides of the antenna base in the label thickness direction (the print-receiving tape side or the bonding adhesive layer side and the separation material layer side) but provided adjacently only to one side. As a result, the dimension of the entire label (tape) in the thickness direction can be reduced as compared with the case of provision adjacent to the both sides. As a result, the generation of wrinkles can be restricted, illegibility of the printed contents is prevented and visibility can be improved. Also, the adhesive layers protruding from the outer edge portions in the width direction are prevented from contacting and adhering to each other as in the case of provision of two or more adhesive layers.

### Advantages of the Invention

According to the present invention, lowering of visibility of the printed contents due to generation of a wrinkle can be prevented.

### BRIEF DESCRIPTION OF THE DRAWING

Fig. 1 is a system block diagram illustrating an RFID tag producing system provided with a tag label producing apparatus.
Fig. 2 is a perspective view illustrating an entire structure of the tag label producing apparatus.
Fig. 3 is a perspective view illustrating a structure of an internal unit inside the tag label producing apparatus.
Fig. 4 is a plan view illustrating the structure of the internal unit.
Fig. 5 is an enlarged plan view schematically illustrating a detailed structure of a cartridge.
Fig. 6 is a conceptual view of a conceptual configuration of an RFID circuit element provided at a base tape fed out of a first roll seen from an arrow D direction in Fig. 5.
Fig. 7 is a partially extracted perspective view illustrating a detailed structure of an essential part of a label discharge mechanism.
Fig. 8 is a perspective view illustrating an appearance of the internal unit in a state where the label discharge mechanism is removed from the structure shown in Fig. 3.
Fig. 9 is a perspective view illustrating an appearance of a cutting mechanism in which a half cutter is removed from the internal unit.
Fig. 10 is a perspective view illustrating an appearance of the cutting mechanism in which the half cutter is removed from the internal unit.
Fig. 11 is a perspective view illustrating a detailed structure of a movable blade and a fixed blade together with a half cut unit.
Fig. 12 is a partially enlarged sectional view illustrating a detailed structure of the movable blade and the fixed blade together with the half cut unit.
Fig. 13 is a front view illustrating an appearance of the movable blade.
Fig. 14 is a cross sectional view of A-A section in Fig. 13.
Fig. 15 is a functional block diagram illustrating a control system of the tag label producing apparatus.
Fig. 16 is a circuit diagram illustrating a circuit configuration of a connection portion among a transmission circuit, a receiving circuit and a loop antenna in a simplified form.
Fig. 17 is a functional block diagram illustrating functional construction of an RFID circuit element.
Fig. 18 is a top view and a bottom view illustrating an example of an appearance of the RFID label formed by writing (or reading) of information of the RFID circuit element and cutting of the tag label tape with print by the tag label producing apparatus.
Fig. 19 is a view obtained by rotating the cross sectional view by IXX-IXX' section in Fig. 18 counterclockwise by 90 degrees.
Fig. 20 is a view illustrating an example of a screen displayed on PC (terminal or general-purpose computer) at an access (reading or writing) to RFID tag information of an IC circuit part of the RFID circuit element by the tag label producing apparatus.
Fig. 21 is a diagram schematically illustrating a layered structure of a tag label tape according to the invention with print (base tape) according to a case 1.
Fig. 22 is a diagram schematically illustrating a layered structure of a tag label tape not forming part of the invention with print (base tape) according to a case 2.
Fig. 23 is a diagram schematically illustrating a layered structure of a tag label tape according to the invention with print (base tape) according to a case 3.
Fig. 24 is a diagram schematically illustrating a layered structure of a tag label tape not forming part of the invention with print (base tape) according to a case 4.
Fig. 25 is a diagram schematically illustrating a layered structure of a tag label tape not forming part of the invention with print (base tape) according to a case 5.
Fig. 26 is a diagram schematically illustrating a layered structure of a tag label tape not forming part of the invention with print (base tape) according to a case 6.
Fig. 27 is a diagram schematically illustrating a layered structure of a tag label tape not forming part of the invention with print (base tape) according to a case 7.
Fig. 28 is a diagram schematically illustrating a layered structure of a tag label tape not forming part of the invention with print (base tape) according to a case 8.
Fig. 29 is a diagram schematically illustrating a layered structure of a tag label tape not forming part of the invention with print (base tape) according to a case 9.
Fig. 30 is a diagram schematically illustrating a layered structure of a tag label tape not forming part of the invention with print (base tape) according to a case 10.
Fig. 31 is a plan view illustrating a detailed structure of a cartridge in a variation when tape bonding is not carried out.
Fig. 32 is a diagram schematically illustrating a layered structure of a tag label tape not forming part of the invention with print (base tape) according to a case 11.
Fig. 33 is a diagram schematically illustrating a layered structure of a tag label tape not forming part of the invention with print (base tape) according to a case 12.
Fig. 34 is a diagram schematically illustrating a layered structure of a tag label tape not forming part of the invention with print (base tape) according to a case 13.
Fig. 35 is a diagram schematically illustrating a layered structure of a tag label tape with print (base tape) according to a case 14.
Fig. 36 is a diagram schematically illustrating a layered structure of a tag label tape not forming part of the invention with print (base tape) according to a case 15.
Fig. 37 is a diagram schematically illustrating a layered structure of a tag label tape not forming part of the invention with print (base tape) according to a case 16.

### BEST MODE FOR CARRYING OUT THE INVENTION

Embodiments of the present invention will be described referring to the attached drawings.

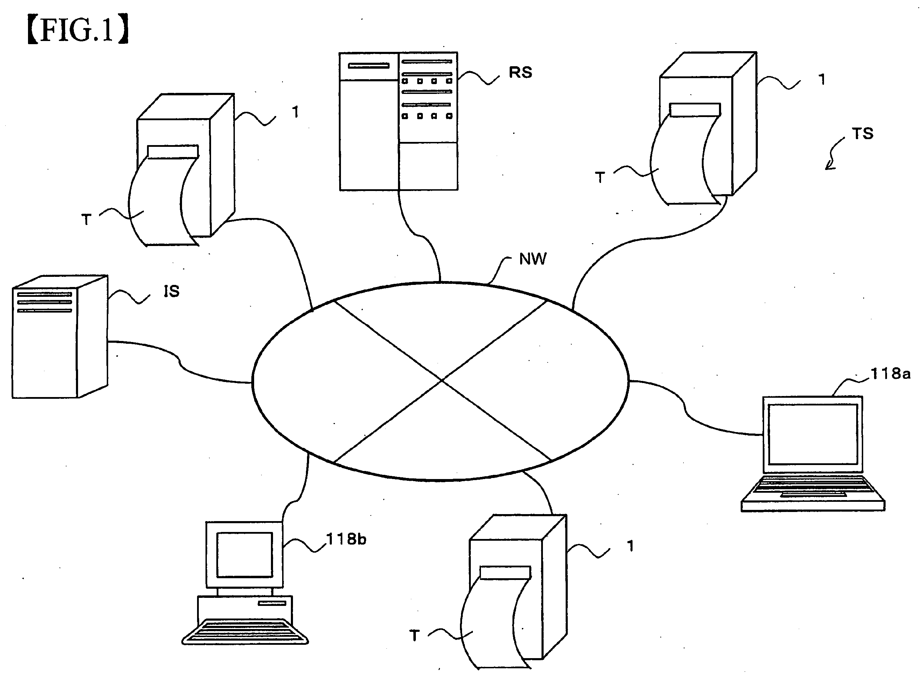

Fig. 1 is a system block diagram illustrating an RFID tag producing system provided with a tag label producing apparatus for producing an RFID label of this embodiment.

In an RFID tag producing system TS shown in Fig. 1, a tag label producing apparatus 1 is connected to a route server RS, a plurality of information servers IS, a terminal 118a, and a general-purpose computer 118b through a wired or wireless communication line NW. The terminal 118a and the general-purpose computer 118b are collectively referred to simply as "PC118" below as appropriate.

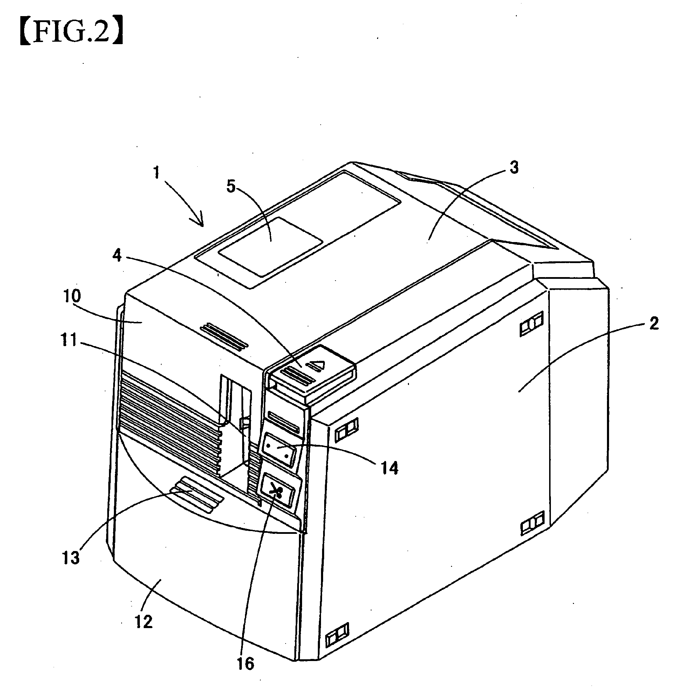

Fig. 2 is a perspective view illustrating the entire structure of the tag label producing apparatus 1.

In Fig. 2, the tag label producing apparatus 1 connected to the PC 118 produces an RFID label with desired printing based on operation from the PC 118 and has a device body 2 and an opening/closing lid 3 provided capable of being opened/closed on the top face of the device body 2.

The device body 2 is provided with a side wall 10 located at the front side (left front side in Fig. 2) and comprising a label discharge port 11 for discharging an RFID label T (which will be described later) produced inside the device body 2 to the outside and a side lid 12 provided below the label discharge port 11 in this side wall 10 and having its lower end rotatably supported.

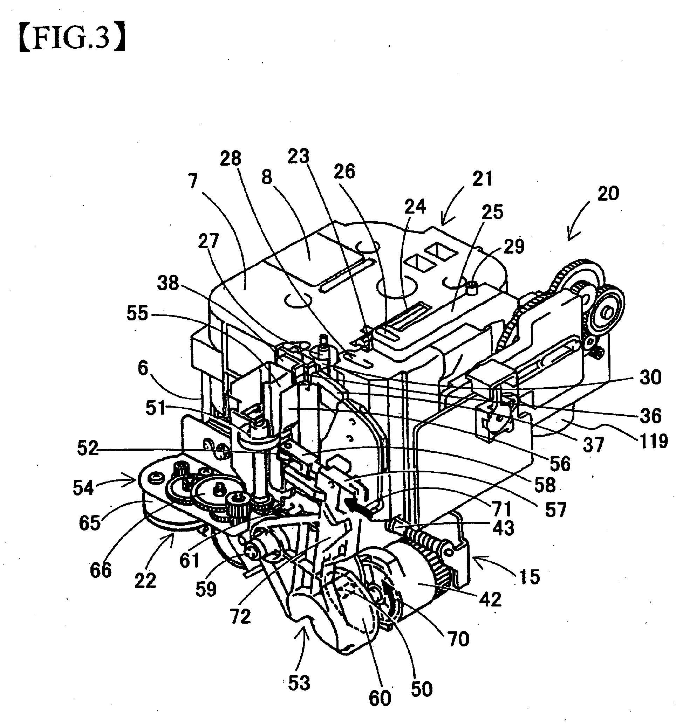

The side lid 12 is provided with a pusher portion 13, and the side lid 12 is opened frontward by pushing in this side wall 13 from above. Also, below an opening/closing button 4 in the side wall 10, a power button 14 for powering on/off of the tag label producing apparatus 1 is provided. Below this power button 14, a cutter driving button 16 is provided for driving a cutting mechanism 15 (See Fig. 3, which will be described later) disposed in the device body 2 through manual operation by a user, and a tag label tape 109 with print (which will be described later) is cut to a desired length so as to produce an RFID label T by pushing this button 16.

The opening/closing lid 3 is pivotally supported rotatably at the end on the right depth side in Fig. 2 of the device body 2 and urged in the opening direction all the time through an urging member such as a spring. And when the opening/closing button 4 arranged adjacently to the opening/closing lid 3 on the top face of the device body 2 is pushed, lock between the opening/closing lid 3 and the device body 2 is released and opened by action of the urging member. A transparent window 5 covered by a transparent cover is provided at the side center of the opening/closing lid 3.

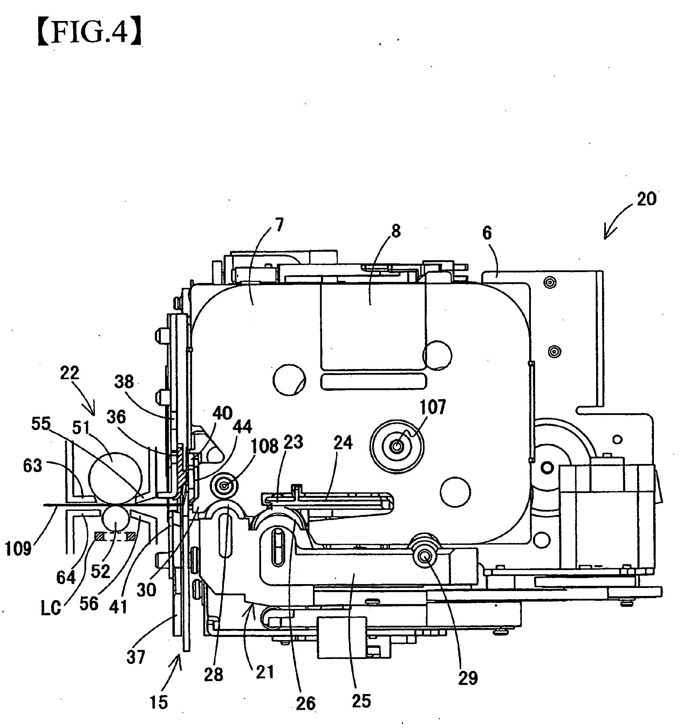

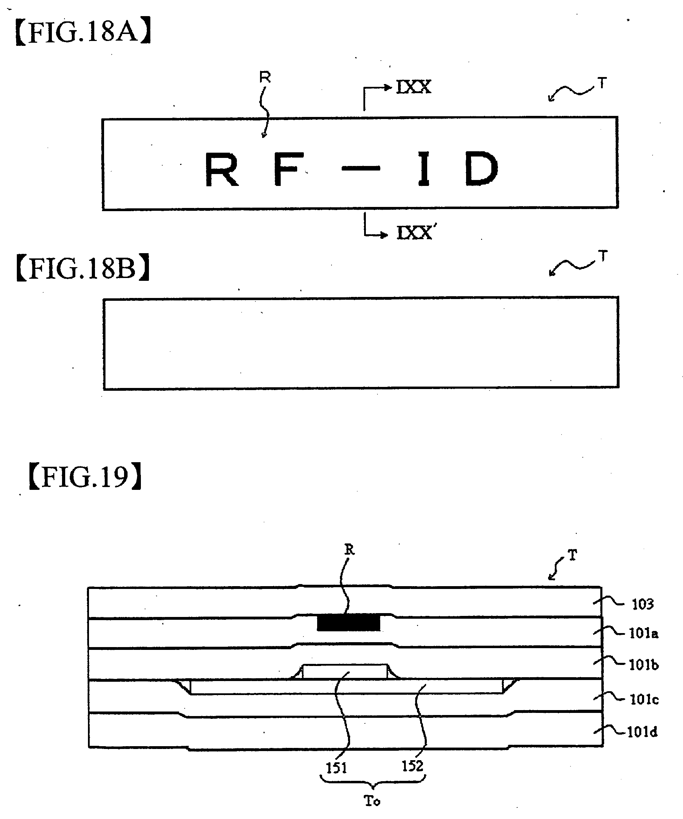

Fig. 3 is a perspective view illustrating a structure (however, a loop antenna LC, which will be described later, is omitted) of an internal unit 20 inside the tag label producing apparatus 1. In Fig. 3, the internal unit 20 comprises a cartridge holder 6 for storing a cartridge 7, a printing mechanism 21 provided with a printing head (thermal head) 23, the cutting mechanism 15, a half cut unit 35 (See Fig. 4, which will be described later), and a label discharge mechanism 22 for discharging the produced RFID label T (See Fig. 18, which will be described later) from the label discharge port 11 (See Fig. 2).

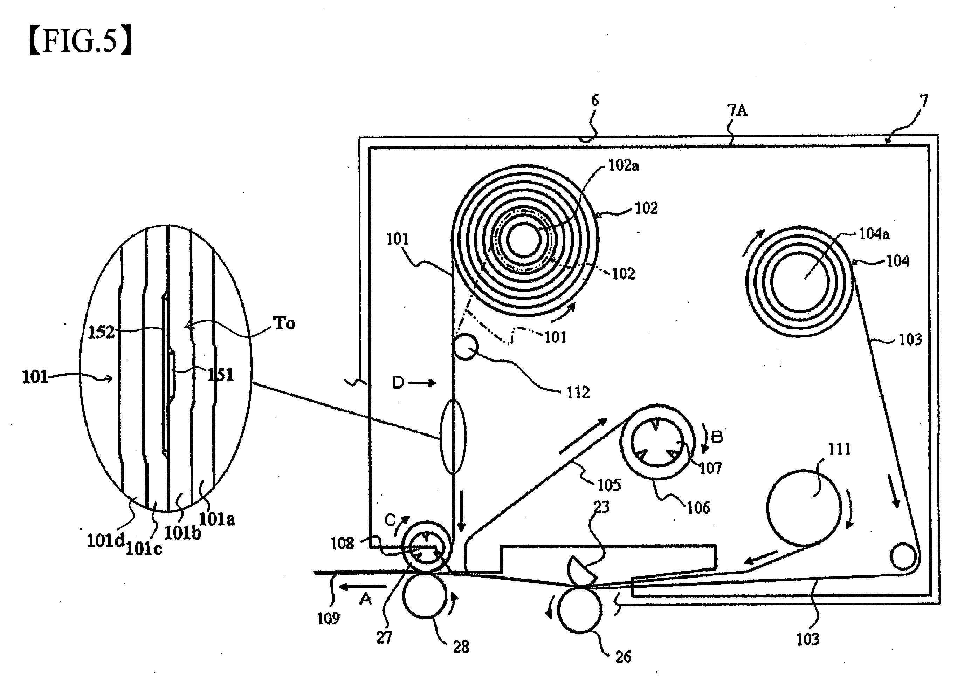

Fig. 4 is a plan view illustrating the structure of the internal unit 20 shown in Fig. 3, and Fig. 5 is an enlarged plan view schematically illustrating the detailed structure of the cartridge 7.

In Figs. 4 and 5, the cartridge holder 6 stores the cartridge 7 so that the direction of the printed the tag label tape 109 in the width direction discharged from the label discharge port 11 should be perpendicular. The cartridge 7 has a housing 7A, a first roll 102 arranged inside the housing 7A and around which a base tape 101 in the band state is wound, a second roll 104 around which a transparent cover film 103 having substantially the same width as that of the base tape 101 is wound, a ribbon-supply roll 111 for feeding out an ink ribbon 105 (thermal transfer ribbon, however, it is not needed when the print-receiving tape is a thermal tape), a ribbon winding roller 106 for winding up the ribbon 105 after printing, a feeding roller 27 rotatably supported in the vicinity of a tape discharge portion 30 of the cartridge 7, and a guide roller 112 functioning as conveying position regulating means.

The feeding roller 27 presses and bonds the base tape 101 and the cover film 103 together so as to have the tag label tape 109 with print and feeds the tape in a direction shown by an arrow A (also functioning as a pressure roller).

In the first roll 102, the base tape 101 in which a plurality of substantially sheet-state antenna bases provided with an RFID circuit element To (indicated simply as "tag" in each figure) are sequentially arranged in the longitudinal direction with a predetermined equal interval is wound around a reel member 102a. The base tape 101 has a four-layered structure (See the partially enlarged view in Fig. 5) in this example (except the portion of the antenna base provided with the RFID circuit element To) and is constructed in lamination in the order of an adhesive layer 101a made of an appropriate adhesive, a colored base film 101b made of polyethylene terephthalate (PET) and the like, an adhesive layer 101c made of an appropriate adhesive, and a detachable paper sheet 101d with the antenna base between them from the side wound inside (right side in Fig. 5) toward the opposite side (left side in Fig. 5).

On the back side of the base film 101b (left side in Fig. 5), the antenna base provided with an RFID circuit element To made of a loop antenna 152 (antenna) constructed in the loop-coil shape for transmission/receiving of information is provided through the adhesive layer 101c.

On the front side of the base film 101b (right side in Fig. 5), the adhesive layer 101a for bonding the cover film 103 later is formed, while on the back side of the base film 101b (left side in Fig. 5), the RFID circuit element To is stuck by the adhesive layer 101c, and moreover, the detachable paper sheet 101d is stuck to the base film 101b by the adhesive layer 101c. When the RFID label T finally completed in the label state is to be stuck to a predetermined article or the like, the detachable paper sheet 101d enables adhesion of the RFID label to the article by the adhesive layer 101c through detachment of the detachable paper sheet.

The second roll 104 has the cover film 103 wound around a reel member 104a. In the cover film 103 fed out of the second roll 104, the ribbon 105 arranged on its back face side (that is, the side to be stuck to the base tape 101) and driven by the ribbon-supply roll 111 and the ribbon winding roller 106 is brought into contact with the back face of the cover film 103 by being pressed by the printing head 23.

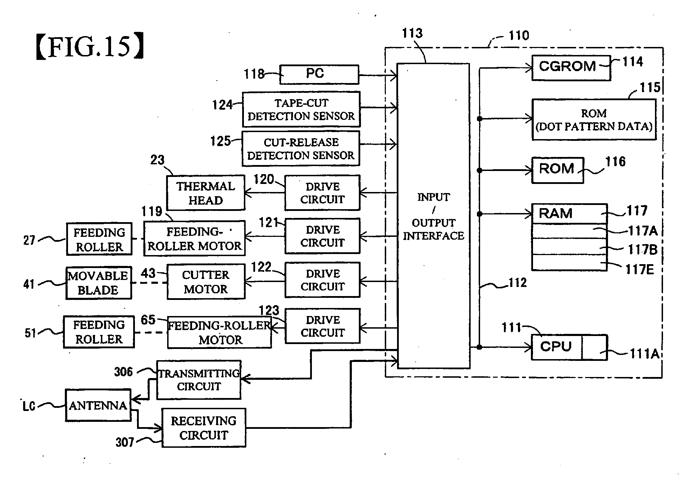

The ribbon winding roller 106 and the feeding roller 27 are rotated/driven in conjunction by a driving force of a feeding-roller motor 65 (See Fig. 3 and Fig. 15, which will be described later), which is a pulse motor, for example, provided outside the cartridge 7, transmitted to a ribbon winding driving shaft 107 and a feeding roller driving shaft 108 through a gear mechanism, not shown.

On the other hand, the printing head 23 provided with a large number of heater elements is mounted to a head mounting portion 24 installed upright at the cartridge holder 6 and arranged on the upstream side in the conveying direction from the feeding roller 27 to the cover film 103.

Also, in front of the cartridge 7 of the cartridge holder 6 (lower side in Fig. 4), a roller holder 25 is pivotally supported rotatably by a support shaft 29 so that switching can be made between a printing position (contact position, see Fig. 4) and a release position (separated position) by a switching mechanism. At this roller holder 25, a platen roller 26 and a tape pressure roller 28 are rotatably disposed, and when the roller holder 25 is switched to the printing position, the platen roller 26 and the tape pressure roller 28 are pressed onto the printing head 23 and the feeding roller 27.

In the above construction, the base tape 101 fed out of the first roll 102 is supplied to the feeding roller 27. On the other hand, as for the cover film 103 fed out of the second roll 104, the ink ribbon 105 arranged on its back face side (that is, the side stuck to the base tape 101) and driven by the ribbon-supply roll 111 and the ribbon winding roller 106 is pressed by the printing head 23 and brought into contact with the back face of the cover film 103.

When the cartridge 7 is attached to the cartridge holder 6 and the roller holder 25 is moved from the release position to the printing position, the cover film 103 and the ink ribbon 105 are held between the printing head 23 and the platen roller 26, and the base tape 101 and the cover film 103 are held between the feeding roller 27 and the pressure roller 28. And the ribbon winding roll 106 and the feeding roller 27 are rotated/driven by the driving force of the feeding-roller motor 65 in a direction shown by an arrow B and an arrow C, respectively, in synchronization with each other. At this time, the feeding roller driving shaft 108, the pressure roller 28 and the platen roller 26 are connected through the gear mechanism (not shown), and with the driving of the feeding roller driving shaft 108, the feeding roller 27, the pressure roller 28, and the platen roller 26 are rotated, and the base tape 101 is fed out of the first roll 102 and supplied to the feeding roller 27 as mentioned above. On the other hand, the cover film 103 is fed out of the second roll 104, and the plurality of heater elements of the printing head 23 is electrified by a printing drive circuit 120 (See Fig. 15, which will be described later). As a result, printing R (See Fig. 18, which will be described later) corresponding to the RFID circuit element To on the base tape 101 as the bonding target is printed on the back face of the cover film 103. And the base tape 101 and the cover film 103 on which printing has been finished are bonded together by the feeding roller 27 and the pressure roller 28 to be integrated and formed as the tag label tape 109 with print and conveyed out of the cartridge 7 through the tape discharge portion 30. The ink ribbon 105 finished with printing on the cover film 103 is wound up by the ribbon winding roller 106 by driving of the ribbon winding roll driving shaft 107.

On the top face of the housing 7A of the cartridge 7, a tape identification display portion 8 displaying the tape width, tape color and the like of the base tape 101 built in the cartridge 7 is provided. When the cartridge 7 is attached to the cartridge holder 6 and the opening/closing lid 3 is closed, the above-mentioned transparent window 5 is opposed to the tape identification display portion 8 so that the tape identification display portion 8 can be visually checked from outside of the device body 2 through the transparent cover of the transparent window 5. As a result, the type and the like of the cartridge 7 attached to the cartridge holder 6 can be easily checked visually from outside the device body 2 through the transparent window 5.

On the other hand, as mentioned above, the internal unit 20 is provided with the cutting mechanism 15 and the label discharge mechanism 22 and is also provided with the loop antenna LC for writing/reading information through wireless communication to/from the RFID circuit element To provided at the base tape 101 (tag label tape with print after bonding, the same applies to the following). And after information writing/reading is carried out by the loop antenna LC to/from the tag label tape 109 with print produced by bonding as above at the RFID circuit element To, the tag label tape 109 with print is cut by the cutting mechanism 15 automatically or by operating the cutter driving button 16 (See Fig. 2) and the RFID label T is produced. This RFID label T is discharged from the label discharge port 11 formed at the side wall 10 (See Fig. 2) by the label discharge mechanism 22 after that.

The cutting mechanism 15 is provided with a fixed blade 40, a movable blade 41 constructed by a metal member for cutting action along with the fixed blade 40, a cutter helical gear 42 connected to the movable blade 41 (See Fig. 3), and a cutter motor 43 connected to the cutter helical gear 42 through a gear train (See Fig. 3).

The label discharge mechanism 22 functions as discharge means disposed in the vicinity of the label discharge port 11 provided at the side wall 3a of the device body 2 and forcedly discharging the tag label tape 109 with print after being cut by the cutting mechanism 15 (in other words, the RFID label T. The same applies to the following) from the label discharge port 11 and also as position regulating means for regulating the conveying position of the tag label tape 109 with print at the vicinity position of the label discharge port 11 (in detail, an information reading/writing position by the loop antenna LC). That is, the label discharge mechanism 22 comprises a feeding roller 51, a pressure roller 52 opposed to the feeding roller 51 with the tag label tape 109 with print between them, a pressure operation mechanism portion 53 operated to press the pressure roller 52 onto the tag label tape 109 with print or to release the pressure (See Fig. 3), and a discharge driving mechanism portion 54 for rotating the tag label tape 109 with print so as to be discharged by the feeding roller 51 in conjunction with the pressure release operation of the pressure operation mechanism portion 53 (See Fig. 3).

At this time, first guide walls 55, 56 and second guide walls 63, 64 for guiding the tag label tape 109 with print to the label discharge port 11 are provided inside the label discharge pot 11 (See Fig. 4). The first guide walls 55, 56 and the second guide walls 63, 64 are integrally formed, respectively, and arranged at the discharge position of the tag label tape 109 with print cut by the fixed blade 40 and the moveable blade 41 so that they are separated from each other with a predetermined interval.

The pressure operation mechanism portion 53 comprises, as shown in the above-mentioned Fig. 3, a roller support holder 57 (arm member), a roller support portion 58 (arm member) mounted at the roller support holder 57 for holding the pressure roller 52 at the tip end portion, a holder support portion 59 for rotatably supporting the roller support holder 57, a cam 60 for driving the pressure operation mechanism portion 53 in conjunction with the cutting mechanism 15, and an urging spring 61.

The roller support portion 58 rotatably supports the pressure roller 52 so as to be held in the vertical direction. And when the roller support holder 57 is rotated counterclockwise around a holder support shaft 59 through the cam 60 by rotation of the cutter helical gear 42 (arrow 71 direction in Fig. 3), the pressure roller 52 is pressed onto the tag label tape 109 with print. Also, when the cutter helical gear 42 is rotated again, the holder support shaft 59 is rotated in the direction opposite to that of the previous time by the urging spring 61, and the pressure roller 52 is separated from the tag label tape 109 with print.

The discharge driving mechanism portion 54 comprises a feeding-roller motor 65 and a gear train 66, and after the tag label tape 109 with print is pressed by the pressure roller 52 onto the feeding roller 51, the discharge operation mechanism portion 54 drives the feeding-roller motor 65 so as to rotate the feeding roller 51 to the discharge direction of the tag label tape 109 with print so that the tag label tape 109 with print is forcedly discharged to the discharge direction.

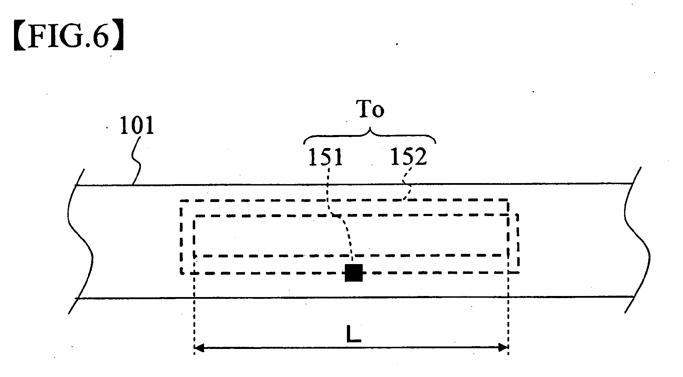

Fig. 6 is a conceptual diagram illustrating a conceptual configuration of the RFID circuit element To provided at the base tape 101 fed out of the first roll 102, seen from an arrow D direction in Fig. 5. In Fig. 6, the RFID circuit element To comprises the loop antenna 152 constructed with the length L in the longitudinal direction in the loop-coil shape for transmitting/receiving information and the IC circuit part 151 connected to that for storing the information.

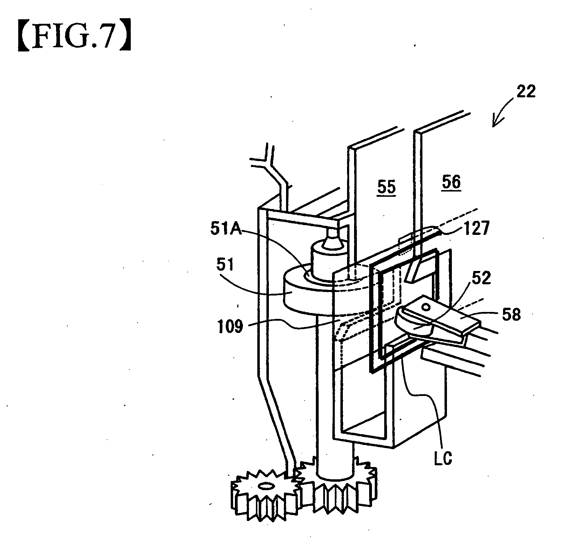

Fig. 7 is a partially extracted perspective view illustrating a detailed structure of an essential part of the label discharge mechanism 11. In Fig. 7, middle portions of the first guide walls 55, 56 in the vertical direction are cut away, and the feeding roller 51 is provided at the first guide wall 55, facing the discharge position of the tag label tape 109 with print from the cutaway portion. The feeding roller 51 has a roller cutaway portion 51A formed by a concentric groove on its top face. In the meantime, at the other first guide wall 56, the pressure roller 52 is supported by the roller support portion 58 of the pressure operation mechanism portion 53, facing the discharge position of the tag label tape 109 with print from the cutaway portion.

The loop antenna LC is arranged in the vicinity of the pressure roller 52 so that the pressure roller 52 is located at the center in the radial direction (inside the radial direction. In detail, on the coil center axis X, which will be described later), and an access (information reading or information writing) is made to the RFID circuit element To provided at the tag label tape 109 with print by magnetic induction (including electromagnetic induction, magnetic coupling and other non-contact contact methods through a magnetic field).

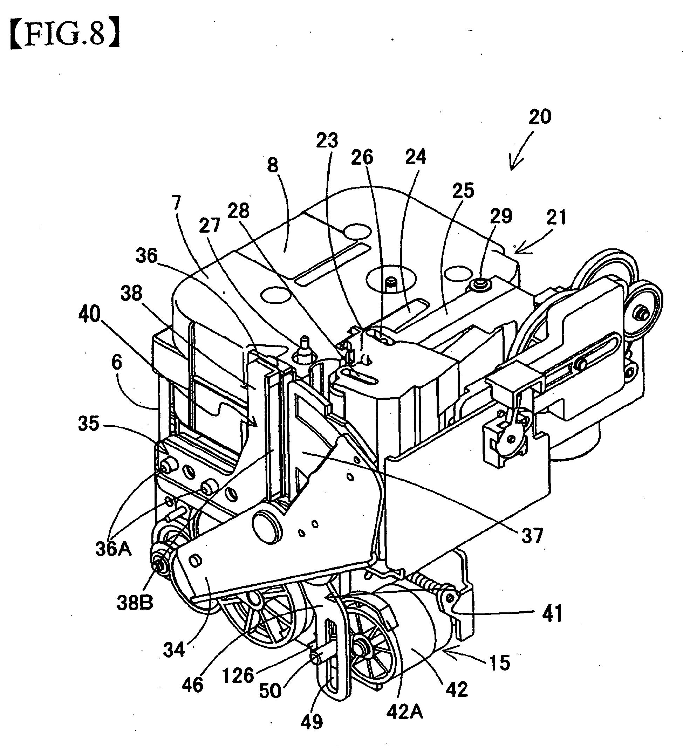

Fig. 8 is a perspective view illustrating an appearance of the internal unit 20 in the state where the label discharge mechanism 22 is removed from the structure shown in Fig. 3.

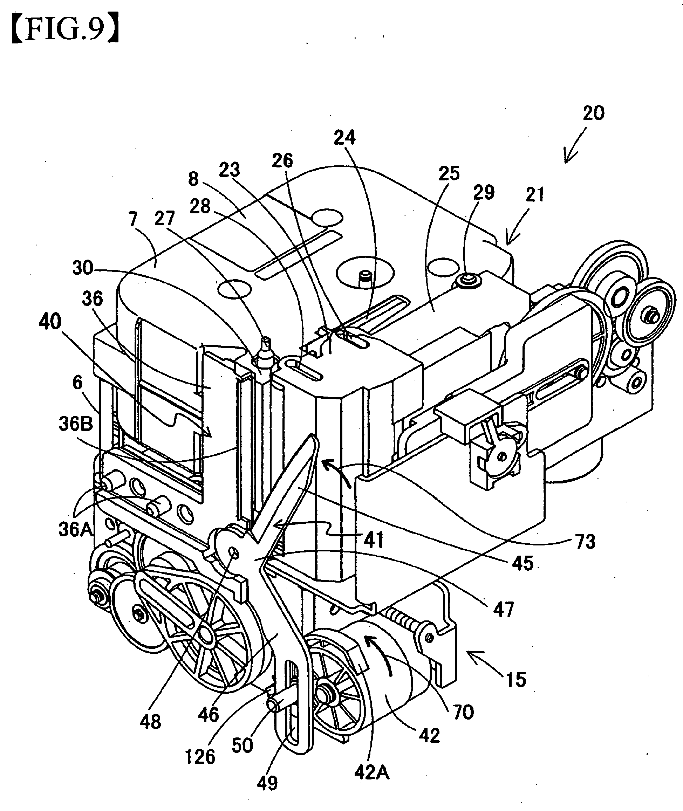

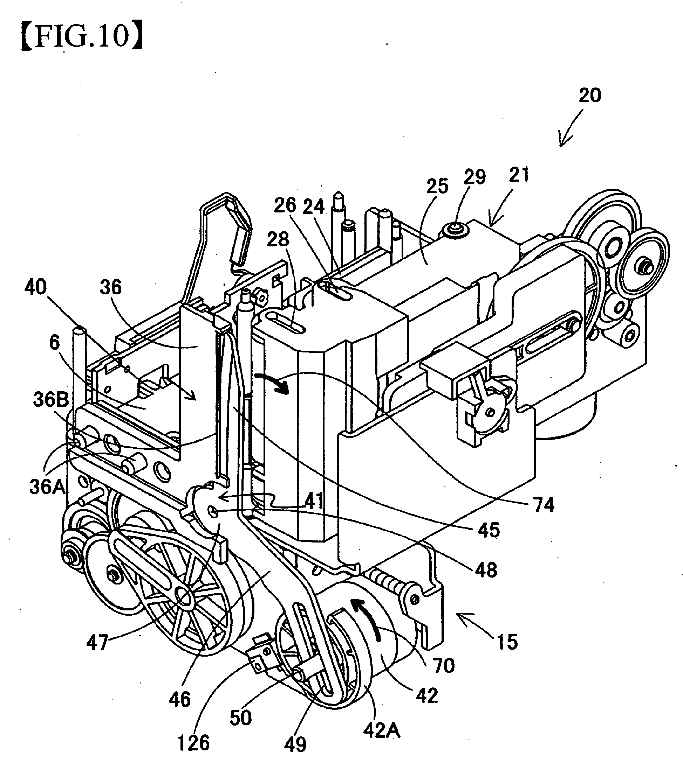

In Fig. 8, a boss 50 formed in the projected state is provided at the cutter helical gear 42, and this boss 50 is inserted into a long hole 49 of the movable blade 41 (See also Figs. 9 and 10, which will be described later). Also, on the downstream side of the fixed blade 40 and the movable blade 41 along the tape discharge direction, the half cut unit 35 is mounted so as to be located between the fixed blade 40 and the movable blade 41 as well as the first guide walls 55, 56 (See Fig. 4).

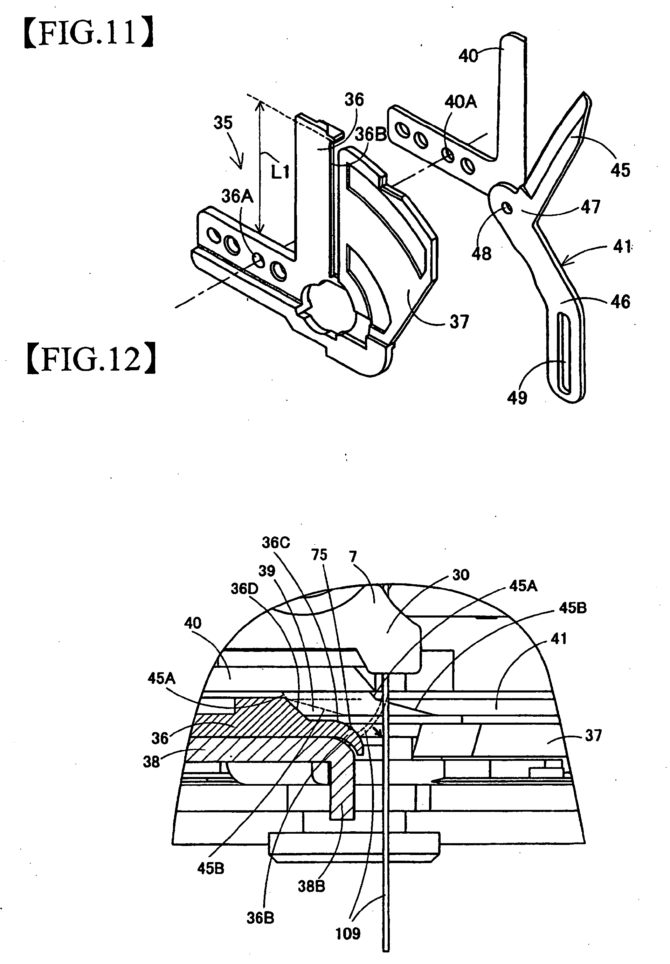

The half cut unit 35 comprises a cradle 38 arranged conforming to the fixed blade 40, a half cutter 34 opposed to the cradle 38 and arranged on the movable blade 41 side, a first guide portion 36 arranged conforming to the fixed blade 40 between the fixed blade 40 and the cradle 38, and a second guide portion 37 opposed to the first guide portion 36 and arranged conforming to the movable blade 41 (See also Fig. 11, which will be described later).

The first guide portion 36 and the second guide portion 37 are integrally constructed and mounted on a side plate 44 (See Fig. 4) with the fixed blade 40 by a guide fixing portion 36A provided at a position corresponding to a fixing hole 40A (See Fig. 11, which will be described later) of the fixed blade 40.

In the cradle 38, an end opposite to the tag label tape 109 with print discharged from the tape discharge portion 30 is bent so that the end becomes in parallel with the tape so as to form a receiving surface 38B. The tag label tape 109 with print is, as mentioned above, in the five-layered structure made by bonding the cover film 103 to the base tape 101 in the four-layered structure of the adhesive layer 101a, the base film 101b, the adhesive layer 101c, and the detachable paper sheet 101d (See also Fig. 19, which will be described later). And by pressing the half cutter 34 onto the receiving surface 38B, the tag label tape 109 with print between the half cutter 34 and the receiving surface 38B is cut in the cover film 103, the adhesive layer 101a, the base film 101b, and the adhesive layer 101c but the detachable paper sheet 101d remains uncut. The receiving surface 38B also plays a role to guide the tag label tape 109 with print to the label discharge port 11 along with the first guide portions 55, 56.

Figs. 9 and 10 show perspective views illustrating an appearance of the cutting mechanism 15 when the half cutter 34 is removed from the internal unit 20.

In Figs. 9 and 10, at the cutting mechanism 15, when the cutter helical gear 42 is rotated by the cutter motor 43 (See Fig. 3), the movable blade 41 is made to swing by the boss 50 and the long hole 49 with a shaft hole 48 as the fulcrum so that the tag label tape 109 with print is cut off.

That is, first, when the boss 50 of the cutter helical gear 42 is located inside (left side in Fig. 9), the movable blade 41 is located away from the fixed blade 40 (hereinafter this state shall be referred to as the initial state. See Fig. 9). And when the cutter motor 43 is driven in this initial state and the cutter helical gear 42 is rotated counterclockwise (arrow 70 direction), the boss 50 is moved outward, the movable blade 41 is rotated counterclockwise around the shaft hole 48 (arrow 73 direction) so as to cut the tag label tape 109 with print together with the fixed blade 40 fixed at the internal unit 20 (hereinafter this state is referred to as the cut state. See Fig. 10).

After the RFID label is produced by cutting the tag label tape 109 with print in this way, it is necessary to return the movable blade 41 to the initial state for cutting the tag label tape 109 with print to be conveyed next time. Thus, the cutter motor 43 is driven again and the cutter helical gear 42 is rotated counterclockwise (arrow 70 direction) so that the boss 50 is moved inward again, the movable blade 41 is rotated clockwise (arrow 74 direction) and the movable blade 41 is separated from the fixed blade 40 (See Fig. 9). Then, the tag label tape 109 with print to be printed and conveyed by the cartridge 7 next time becomes capable of being cut.

At this time, a cam 42A for cutter helical gear is provided on the cylindrical outer wall of the cutter helical gear 42, and when the cutter helical gear 42 is rotated by the cutter motor 43, a micro switch 126 provided adjacently to the cutter helical gear 42 is switched from the on state to the off state by action of the cam 42A for cutter helical gear. As a result, the cut state of the tag label tape 109 with print can be detected.

Fig. 11 is a perspective view illustrating the detailed structure of the movable blade 41 and the fixed blade 40 along with the half cut unit 35, and Fig. 12 is a partially enlarged sectional view of that portion. In Figs. 11 and 12, the fixed blade 40 is fixed by a screw or the like, which is fixing means, at the side plate 44 (See Fig. 4) provided in the standing state on the left side of the cartridge holder 6 in the printing mechanism 15 through the fixing hole 40A.

The movable blade 41 is substantially in the V-shape and comprises a blade portion 45 provided at the cutting portion, a shank portion 46 located opposite to the blade portion 45, and a bent portion 47. The bent portion 47 is provided with the shaft hole 48 thereon and is supported by the side plate 44 at the shaft hole 48 so that the movable blade 41 can be rotated with the bent portion 47 as the fulcrum. Also, the long hole 49 is provided at the shank portion 46 opposite to the blade portion 45 provided at the cut portion of the movable blade 41. The blade portion 45 is formed by a two-stage blade, and its blade surface is constructed by two inclined surfaces with different inclination angles of a first inclined surface 45A whose thickness is gradually thinned and a second inclined surface 45B.

On the other hand, an end 36B in the first guide portion 36 of the above-mentioned half cut unit 35, opposite to the tag label tape 109 with print to be discharged, is projected along the receiving surface 38B formed at the end of the cradle 38 and bent in the discharge direction of the tag label tape 109 with print. Therefore, the end 36B of the first guide portion 36 has a smooth curved surface with respect to the discharge direction of the tag label tape 109 with print in a contact surface 36C to the tag label tape 109 with print to be discharged from the cartridge 7.

By projecting the end 36B of the first guide portion 36 and making the contact surface 36C in the curved surface, the tip end portion of the tag label tape 109 with print curled more than a certain radius of curvature first hits the contact surface 36C of the first guide portion 36. At that time, if the tip end portion of the tag label tape 109 with print hits the downstream side in the discharge direction of the tag label tape 109 with print from a boundary point 75 on the contact surface 36C of the first guide portion (lower direction in Fig. 12), the tip end portion of the tag label tape 109 with print is moved to the downstream side along the curved surface and guided to the direction of the label discharge port 11 without intruding between the fixed blade 40 and the first guide portion 36 or the cradle 38.

Also, the first guide portion 36 is formed so that a guide width L1 corresponding to the conveying path of the tag label tape 109 with print (See Fig. 11) is larger than the maximum width (36 mm in this embodiment) of the tag label tape 109 with print to be attached, and an internal surface 36D is formed continuously to the contact surface 36C. The internal surface 36D is formed opposite to the first and the second inclined surfaces 45A, 45B of the movable blade 41 (the detail will be described later), and parts of the first and the second inclined surfaces 45A, 45B of the movable blade 41 are brought into contact at cutting (See Fig. 12). Since the movable blade 41 has its blade portion formed by the two-stage blade, when the tag label tape 109 with print is cut by the movable blade 41, a gap 39 is formed between the contact surface 36C and the internal surface 36D, which are the end portions of the first guide portion 36, and the second inclined surface 45B of the movable blade 41 (See Fig. 12).

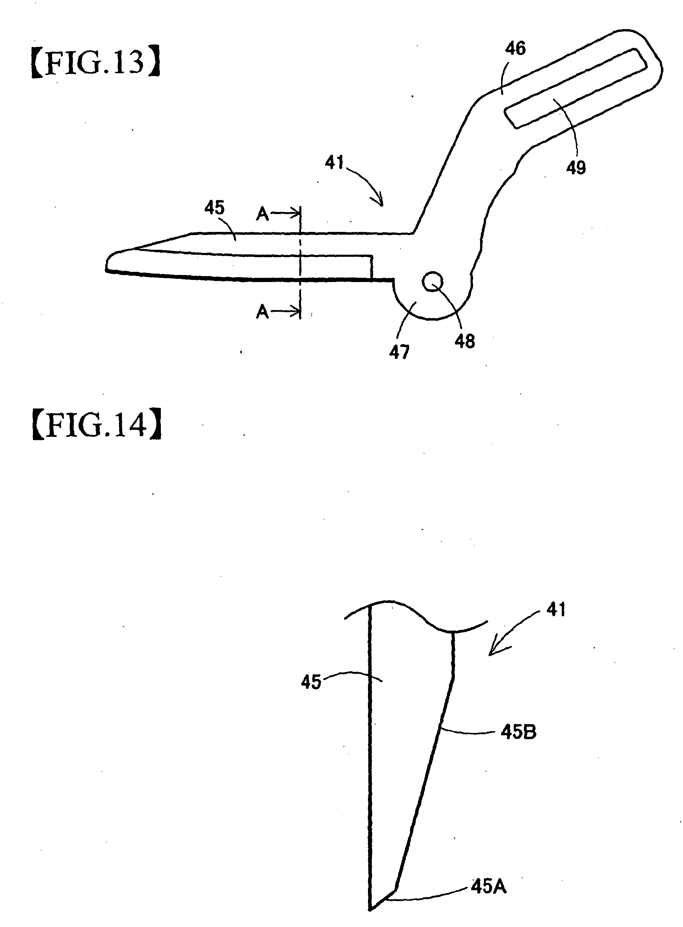

Fig. 13 is a front view illustrating an appearance of the movable blade 41, and Fig. 14 is a cross sectional view of an A-A section in Fig. 13.

In Figs. 13 and 14, the first inclined surface 45A in this embodiment forms an angle of 50 degrees with the back face opposite to the first inclined face 45A of the blade portion 45.

Fig. 15 is a functional block diagram illustrating a control system of the tag label producing apparatus 1 of this embodiment. In Fig. 15, on a control board (not shown) of the tag label producing apparatus 1, a control circuit 110 is arranged.

At the control circuit 110, a CPU 111 provided with a timer 111A inside and controlling each device, an input/output interface 113 connected to this CPU 111 through a data bus 112, a CGROM 114, ROM 115, 116, and a RAM 117 are provided.

At the CGROM 114, dot patterns for display are stored in correspondence with code data for each of a large number of characters.

In the ROM (dot pattern data memory) 115, the dot pattern data for printing is classified by font (gothic fonts, Min dynasty fonts and the like), and each font is stored according to printing character size and code data for each of the large number of characters for printing characters such as alphabetical characters and symbols. Also, graphic pattern data is stored for printing graphic images including graduation rendering.

In the ROM 116, a printing driving control program for driving the printing head 23, the feeding-roller motor 65, and the feeding-roller motor 65 by reading out data of a printing buffer in correspondence with the code data of characters such as letters, numerals and the like inputted from the PC 118, a pulse-number determining program for determining the number of pulses corresponding to a forming energy amount of each printing dot, a cutting driving control program for conveying the tag label tape 109 with print to the cut position by driving the feeding-roller motor 65 when printing is finished and cutting the tag label tape 109 with print by driving the cutter motor 43, and a tape discharge program for forcedly discharging the tag label tape 109 with print which has been cut (= RFID label T) from the label discharge port 11 by driving the feeding-roller motor 65, and other various programs required for control of the tag label producing apparatus 1 are stored. The CPU 111 executes various calculations based on the various programs stored in the ROM 116.

In the RAM 117, a text memory 117A, a printing buffer 117B, a parameter storage area 117E and the like are provided. In the text memory 117A, document data inputted from the PC 118 is stored. In the printing buffer 117B, the dot patterns for printing such as a plurality of characters and symbols and applied pulse number, which is a forming energy of each dot, are stored as the dot pattern data, and the printing head 23 carries out dot printing according to the dot pattern data stored in this printing buffer 117B. In the parameter storage area 117E, various calculation data is stored.

To the input/output interface 113, the PC 118, the printing drive circuit 120 for driving the printing head 23, a conveying motor drive circuit 121 for driving the feeding-roller motor 65, a cutter motor drive circuit 122 for driving the cutter motor 43, a tape discharge motor drive circuit 123 for driving the feeding-roller motor 65, a transmitting circuit 306 for generating a carrier wave for making an access (reading/writing) to the RFID circuit element To through the loop antenna LC and for modulating the carrier wave based on a control signal inputted from the control circuit 110, a receiving circuit 307 for demodulating a response signal received through the loop antenna LC from the RFID circuit element To and outputting it to the control circuit 110, a tape cut sensor 124, and a cut release detection sensor 125 are connected, respectively.

In a control system centered on the control circuit 110, when character data is inputted through the PC 118, the text (document data) is sequentially stored in the text memory 117A, the printing head 23 is driven through the drive circuit 120, and each of the heater elements is selectively heated/driven in correspondence with printing dots for one line for printing the dot pattern data stored in the printing buffer 117B, in synchronization with which the feeding-roller motor 65 carries out conveying control of the tape through the drive circuit 121. Also, the transmitting circuit 306 carries out modulation control of the carrier wave based on the control signal from the control circuit 110, and the receiving circuit 307 performs processing of the demodulated signal based on the control signal from the control circuit 110.

Also, the tape cut sensor 124 and the cut release detection sensor 125 are constituted by the cam 42A for cutter helical gear provided on the cylindrical outer wall of the cutter helical gear 42 and the micro switch 126 (See Figs. 9 and 10). Specifically, when the cutter helical gear 42 is rotated by the cutter motor 43, the micro switch 126 is switched from the off state to the on state by action of the cam 42A for cutter helical gear so as to detect that cutting of the tag label tape 109 with print by the movable blade 45 has been finished. This constitutes the tape cut sensor 124. Also, if the cutter helical gear 42 is further rotated, the micro switch 126 is switched from the on state to the off state by action of the cam 42A for cutter helical gear so as to detect that the movable blade 45 has returned to the release position. This constitutes the cut release detection sensor 125.

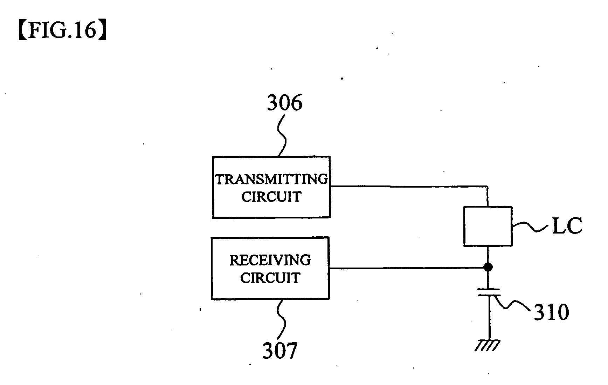

Fig. 16 is a circuit diagram schematically illustrating a circuit configuration of a connection portion between the receiving circuit 307 and the loop antenna LC. In Fig. 16, the transmitting circuit 306 is connected to the device-side loop antenna LC, while the receiving circuit 307 is connected to a capacitor 310 connected in series to the device-side loop antenna LC.

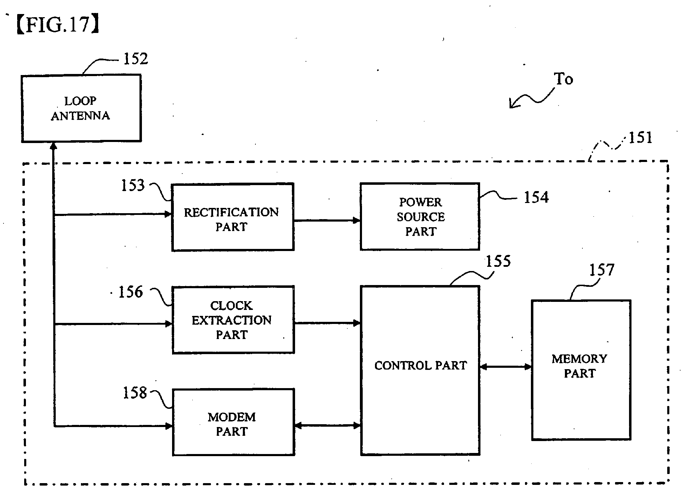

Fig. 17 is a functional block diagram illustrating a functional configuration of the RFID circuit element To. In Fig. 17, the RFID circuit element To has the loop antenna 152 for transmitting/receiving a signal in a non-contact manner with the loop antenna LC on the tag label producing apparatus 1 by magnetic induction and the IC circuit part 151 connected to the loop antenna 152.

The IC circuit part 151 comprises a rectification part 153 for rectifying the carrier wave received by the loop antenna 152, a power source part 154 for accumulating energy of the carrier wave rectified by the rectification part 153 so as to make it a driving power supply, a clock extraction part 156 for extracting a clock signal from the carrier wave received by the loop antenna 152 so as to supply it to a control part 155, a memory part 157 which can store a predetermined information signal, a modem part 158 connected to the loop antenna 152, and the control part 155 for controlling operation of the RFID circuit element To through the rectification part 153, the clock extraction part 156, the modem part 158 and the like.

The modem part 158 demodulates a communication signal from the loop antenna LC of the tag label producing apparatus 1 received from the loop antenna 152 and modulates/reflects the carrier wave received from the loop antenna 152 based on the response signal from the control part 155.

The control part 155 interprets a received signal demodulated by the modem part 158, generates a reply signal based on the information signal stored in the memory part 157, and executes basic control such as control of reply by the modem part 158.

Figs. 18A and 18B are views illustrating an example of the appearance of the RFID label T formed after information writing (or reading) of the RFID circuit element To and cutting of the tag label tape 109 with print by the tag label producing apparatus 1 constructed as above have been finished, in which Fig. 18A is a top view and Fig. 18B is a bottom view. Fig. 19 is a cross sectional diagram of the IXX-IXX' section in Fig. 18.

In Figs. 18A, 18B and 19, the RFID label T is in the five-layered structure in which the cover film 103 is added to the four-layered structure shown in Fig. 5 (except the antenna base) as mentioned above made of four layers of the cover film 103, the adhesive layer 101a, the base film 101b, with the antenna base provided with the RFID circuit element To held between them, the adhesive layer 101c, and the detachable paper sheet 101d from the cover film 103 side (upper side in Fig. 19) to the opposite side (lower side in Fig. 19). And as mentioned above, the RFID circuit element To including the loop antenna 152 provided on the back side of the base film 101b is provided adjacently to the adhesive layer 101c, and the printing R (in this example, the letters of "RF-ID" indicating the type of the RFID label T) is printed on the back face of the cover film 103.

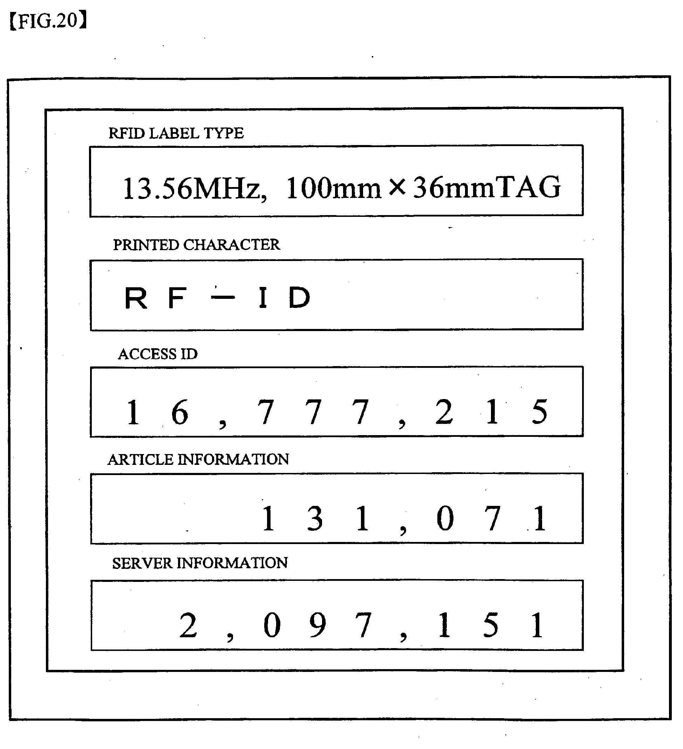

Fig. 20 is a view showing an example of a screen displayed on the PC 118 (the terminal 118a or the general-purpose computer 118b) at an access (reading or writing) to the RFID tag information of the IC circuit part 151 in the RFID circuit element To by the above-mentioned tag label producing apparatus 1.

In Fig. 20, in this example, the type of the tag label (access frequency and tape dimension), the printing R printed in correspondence with the RFID circuit element To, an access (reading or writing) ID, which is identification information (tag ID) specific to the RFID circuit element To, an address of the article information stored in the information server IS, and an address of a storage destination of the corresponding information in the route server RS can be displayed on the PC 118. And the tag label producing apparatus 1 is operated by operation of the PC 118, the printing letters R is printed on the cover film 103 and the information such as the writing ID and the article information is written in the IC circuit part 151 (or, the information such as the reading ID or the article information stored in the IC circuit part 151 in advance is read out).

At the above reading or writing, correspondence between the tag ID of the RFID circuit element To of the produced RFID label T and the information read out of the IC circuit part 151 of the RFID label T (or information written in the IC circuit part 151) is stored in the above-mentioned route server RS to be referenced as necessary.

In the above, when the tag label tape 109 with print with print (RFID label T) is constructed using the tag tape in the laminated structure including substantially the sheet-state antenna base provided with the RFID circuit element To, the cover film 103 provided on the front side in the thickness direction in the laminated structure and to which the predetermined printing is applied and the RFID circuit element To provided at the intermediate portion in the thickness direction are required, and at least one adhesive layer for bonding the RFID circuit element To and the cover film 103 together or for affixing the entire label to the adhesion target is separately needed. However, the more these adhesive layers are provided, the larger the dimension in the thickness direction in the entire label is increased, and a wrinkle is easily generated by a difference between the inner and the outer circumferences when the tag tape is wound in the roll shape, for example.

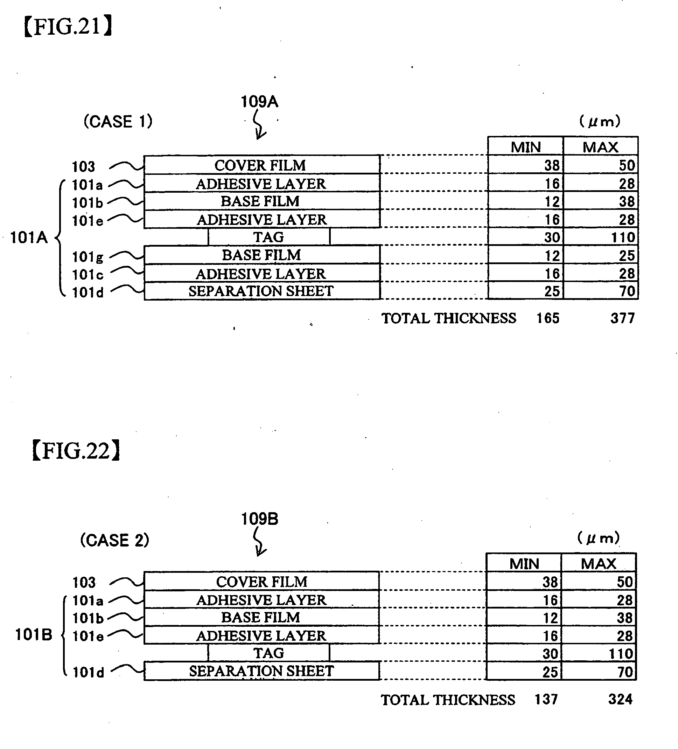

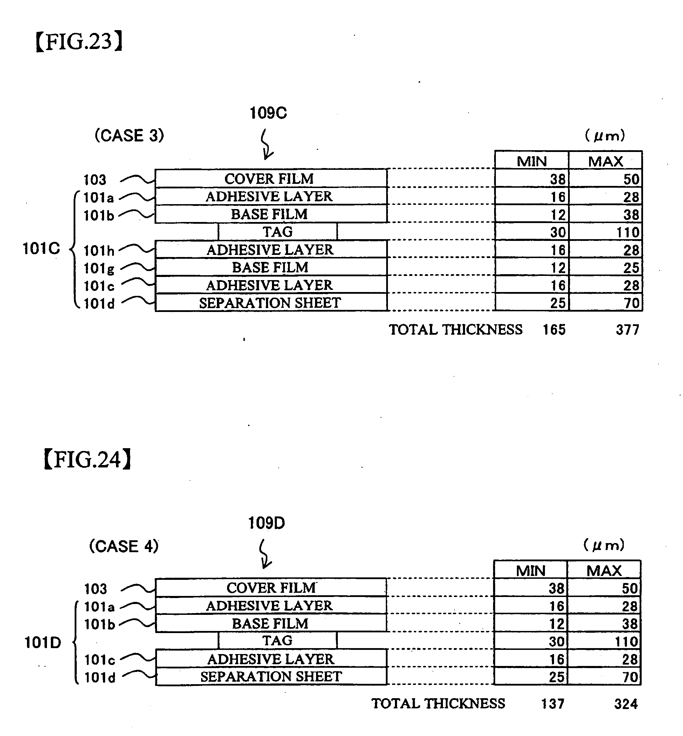

The present invention is to solve the nonconformity, and its most distinctive characteristic is that the adhesive layer is not provided adjacently to both sides of the RFID circuit element To in the label thickness direction (both the printed side and the separation material layer side) but adjacently only to one of them (as the adhesive layer 101c in Figs. 5 and 19). The inventors of the present application have created the tag label tape 109 with print (in other words, RFID label T) in various constructions with the dimensions in the thickness direction as shown in Figs. 21 and after of which only Figures 21 and 23 form part of the present invention as defined in the appended claims (cases 1 and 3). The other examples are provided as comparative examples. And they examined generation of a wrinkle and rigidity of each and obtained the minimum value and the maximum value (unit is µm) of the total thickness in which the wrinkle generation is restricted. The detail will be described below. The substantially sheet-state antenna base including the RFID circuit element To is referred to simply as "tag" in an abbreviated manner in Figs. 21 and after.

Fig. 21 is a diagram schematically illustrating an example (hereinafter referred to as "case 1") of a layered structure of a tag label tape 109A with print (base tape 101A). As shown in Fig. 21, in the case 1, the base tape 101A comprises an adhesive layer 101a, a base film 101b, an adhesive layer 101e, a base film 101g, an adhesive layer 101c, and a detachable paper sheet 101d from the front side (upper side in Fig. 21), and the antenna base including the RFID circuit element To is provided to be held between the adhesive layer 101e and the base film 101g. On the front side of the base tape 101A constructed as above, the cover film 103 is stuck through the adhesive layer 101a and the tag label tape 109A with print is formed. In the construction of the case 1, the minimum value of the total thickness is 165 µm and the maximum value is 377 µm, as described below the table.

By providing the adhesive layer 101e not adjacently to both sides of the antenna base including the RFID circuit element To in the label thickness direction (both the printed side and the detachable paper sheet side) but adjacently only to the printed side, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the base film 101b through the adhesive layer 101e, and the base film 101b and the base film 101g can be bonded together by a portion located outside the antenna base in the adhesive layer 101e.

Fig. 22 is a diagram schematically illustrating an example (hereinafter referred to as "case 2") of a layered structure of a tag label tape 109B with print (base tape 101B). As shown in Fig. 22, in the case 2, the base tape 101B comprises the adhesive layer 101a, the base film 101b, the adhesive layer 101e, and the detachable paper sheet 101d from the front side (upper side in Fig. 22), and the antenna base including the RFID circuit element To is provided to be held between the adhesive layer 101e and the detachable paper sheet 101d. On the front side of the base tape 101B constructed as above, the cover film 103 is stuck through the adhesive layer 101a so that the tag label tape 109B with print is formed. In the construction of the case 2, the minimum value of the total thickness is 137 µm and the maximum value is 324 µm, as described below the table.

By providing the adhesive layer 101e adjacently only to the printed side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the base film 101b through the adhesive layer 101e, and the base film 101b and the detachable paper sheet 101d can be bonded together by a portion located outside the antenna base in the adhesive layer 101e.

Fig. 23 is a diagram schematically illustrating an example (hereinafter referred to as "case 3") of a layered structure of a tag label tape 109C with print (base tape 101C). As shown in Fig. 23, in the case 3, the base tape 101C comprises the adhesive layer 101a, the base film 101b, the adhesive layer 101h, the base film 101g, the adhesive layer 101c, and the detachable paper sheet 101d from the front side (upper side in Fig. 23), and the antenna base including the RFID circuit element To is provided to be held between the base film 101b and the adhesive layer 101h. On the front side of the base tape 101C constructed as above, the cover film 103 is stuck through the adhesive layer 101a so that the tag label tape 109C with print is formed. In the construction of the case 3, the minimum value of the total thickness is 165 µm and the maximum value is 377 µm, as described below the table (similar to the case 1).

By providing the adhesive layer 101h adjacently only to the detachable paper sheet side of the antenna base, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the base film 101g through the adhesive layer 101h, and the base film 101b and the base film 101g can be bonded together by a portion located outside the antenna base in the adhesive layer 101h.

Fig. 24 is a diagram schematically illustrating an example (hereinafter referred to as "case 4") of a layered structure of a tag label tape 109D with print (base tape 101D). As shown in Fig. 24, in the case 4, the base tape 101D comprises the adhesive layer 101a, the base film 101b, the adhesive layer 101c, and the detachable paper sheet 101d from the front side (upper side in Fig. 24), and the antenna base including the RFID circuit element To is provided to be held between the base film 101b and the adhesive layer 101c. On the front side of the base tape 101D constructed as above, the cover film 103 is stuck through the adhesive layer 101a so that the tag label tape 109D with print is formed. In the construction of the case 4, the minimum value of the total thickness is 137 µm and the maximum value is 324 µm, as described below the table (similar to the case 2).

By providing the adhesive layer 101c adjacently only to the detachable paper sheet side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the base film 101b and the detachable paper sheet film 101d can be bonded together by a portion located outside the antenna base in the adhesive layer 101c (bonding adhesive layer).

The construction of the case 4 corresponds to the layered structure of the base tape 101 used in the above embodiment (See Fig. 5) and the produced tag label tape 109 with print (or the RFID label T. See Fig. 19), and the dimension in the thickness direction of each layer of the base tape 101 and the tag label tape 109 with print (RFID label T) is set similar to that of the case 4.

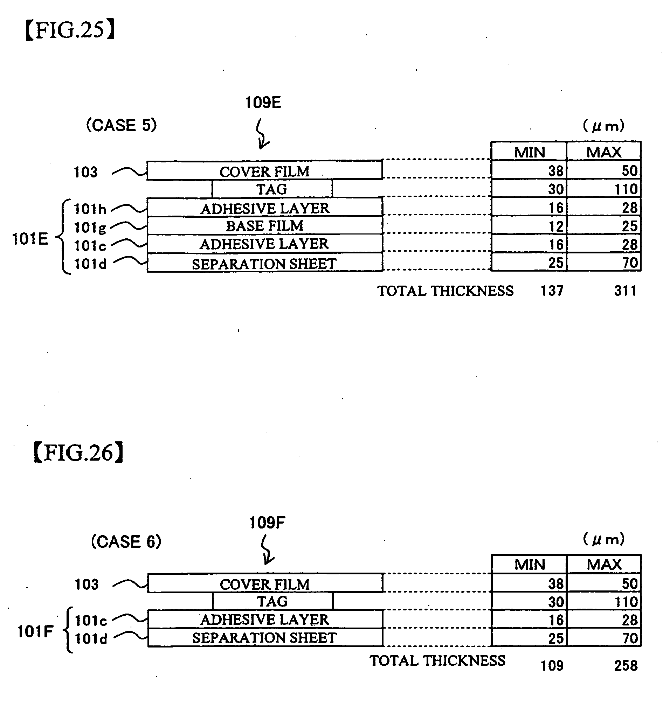

Fig. 25 is a diagram schematically illustrating an example (hereinafter referred to as "case 5") of a layered structure of a tag label tape 109E with print (base tape 101E). As shown in Fig. 25, in the case 5, the base tape 101E comprises the adhesive layer 101h, the base film 101g, the adhesive layer 101c, and the detachable paper sheet 101d from the front side (upper side in Fig. 25). On the front side of the base tape 101E constructed as above, the cover film 103 is stuck through the adhesive layer 101h, and the antenna base including the RFID circuit element To is provided to beheld between the cover film 103 and the adhesive layer 101h so that the tag label tape 109E with print is formed. In the construction of the case 5, the minimum value of the total thickness is 137 µm and the maximum value is 324 µm, as described below the table.

By providing the adhesive layer 101h adjacently only to the detachable paper sheet side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the base film 101g through the adhesive layer 101h, and the cover film 103 and the base film 101g can be bonded together by a portion located outside the antenna base in the adhesive layer 101h (bonding adhesive layer) .

Fig. 26 is a diagram schematically illustrating an example (hereinafter referred to as "case 6") of a layered structure of a tag label tape 109F with print (base tape 101F). As shown in Fig. 26, in the case 6, the base tape 101F comprises the adhesive layer 101c and the detachable paper sheet 101d from the front side (upper side in Fig. 26). On the front side of the base tape 101F constructed as above, the cover film 103 is stuck through the adhesive layer 101c, and the antenna base including the RFID circuit element To is provided to be held between the cover film 103 and the adhesive layer 101c so that the tag label tape 109F with print is formed. In the construction of the case 6, the minimum value of the total thickness is 109 µm and the maximum value is 258 µm, as described below the table.

By providing the adhesive layer 101c adjacently only to the detachable paper sheet side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers.

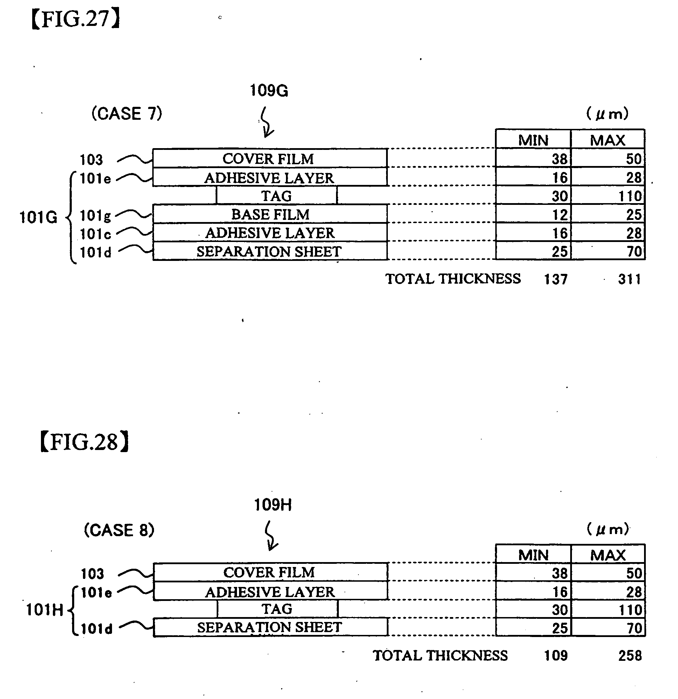

Fig. 27 is a diagram schematically illustrating an example (hereinafter referred to as "case 7") of a layered structure of a tag label tape 109G with print (base tape 101G). As shown in Fig. 27, in the case 7, the base tape 101G comprises the adhesive layer 101e, the base film 101g, the adhesive layer 101c, and the detachable paper sheet 101d from the front side (upper side in Fig. 27), and the antenna base including the RFID circuit element To is provided to be held between the adhesive layer 101e and the base film 101g. And on the front side of the base tape 101G constructed as above, the cover film 103 is stuck through the adhesive layer 101e so that the tag label tape 109G with print is formed. In the construction of the case 7, the minimum value of the total thickness is 137 µm and the maximum value is 311 µm, as described below the table.

By providing the adhesive layer 10le adjacently only to the printed side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the base film 101g through the adhesive layer 101e, and the cover film 103 and the base film 101g can be bonded together by a portion located outside the antenna base in the adhesive layer 101e.

Fig. 28 is a diagram schematically illustrating an example (hereinafter referred to as "case 8") of a layered structure of a tag label tape 109H with print (base tape 101H). As shown in Fig. 28, in the case 8, the base tape 101H comprises the adhesive layer 10le and the detachable paper sheet 101d from the front side (upper side in Fig. 28). And on the front side of the base tape 101H constructed as above, the cover film 103 is stuck through the adhesive layer 101e, and the antenna base including the RFID circuit element To is provided to be held between the adhesive layer 101e and the detachable paper sheet 101d so that the tag label tape 109H with print is formed. In the construction of the case 8, the minimum value of the total thickness is 109 µm and the maximum value is 258 µm, as described below the table (similar to the case 6).

By providing the adhesive layer 101e adjacently only to the printed side of the antenna base including the RFID circuit element To, the dimension in the thickness direction of the entire label (tape) can be reduced as compared by provision adjacent to the both sides. As a result, generation of a wrinkle is restricted, illegibility of the printed contents in the printed area due to the wrinkle can be prevented, and visibility can be improved. Also, the adhesive layers protruding from the outer edge portions in the width direction are not brought into contact and bonded as with the case of provision of two or more adhesive layers. Also, the RFID circuit element To can be attached to the cover film 103 through the adhesive layer 101e.

Particularly in the cases 1 and 3 of this embodiment, the base films 101b, 101g are provided on both sides in the thickness direction so as to hold the RFID circuit element To between them. By interposing/arranging the RFID circuit element To between the base film 101b and the base film 101g in this way, even after the detachable paper sheet 101d is detached by a user after formation of the RFID label T, such a structure can be obtained that the antenna base including the RFID circuit element To can not be directly seen by means of the base film 101g.

### (1) If the thickness is to be reduced by an adhesive layer not using a base material while the adhesive layer is provided on both sides of the tag:

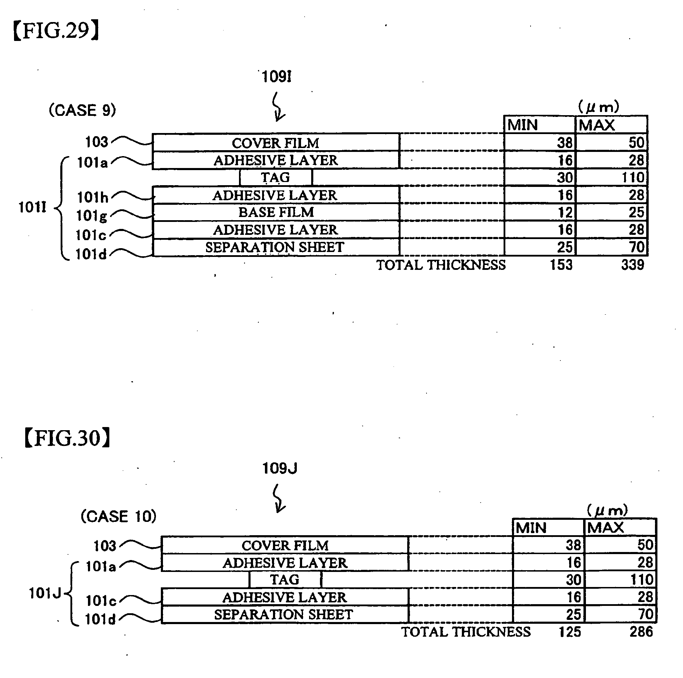

Fig. 29 is a diagram schematically illustrating an example (hereinafter referred to as "case 9") of a layered structure of a tag label tape 109I with print (base tape 101I). As shown in Fig. 29, the case 9 corresponds to the structure of the case 3 in Fig. 23, in which the base film 101b as the adhesive base is omitted, and the base tape 101I comprises the adhesive layer 101a, the adhesive layer 101h, the base film 101g, the adhesive layer 101c, and the detachable paper sheet 101d from the front side (upper side in Fig. 29), and the antenna base including the RFID circuit element To is provided to be held between the adhesive layer 101a and the adhesive layer 101h. And on the front side of the base tape 101I constructed as above, the cover film 103 is stuck through the adhesive layer 101a so that the tag label tape 109I with print is formed. In the construction of the case 9, the minimum value of the total thickness is 153 µm and the maximum value is 339 µm, as described below the table.

The adhesive layers 101h, 101a are provided adjacent to both sides of the detachable paper sheet side and the printed side of the antenna base, and the adhesive layer 101a is made as a non-application type adhesive layer not requiring an adhesive base material. In this type of adhesive layer, since the dimension in the thickness direction is reduced by absence of the adhesive base material as compared with a normal adhesive layer in which an adhesive is applied to the adhesive base material, the dimension in the thickness direction of the entire label (tape) can be reduced. As a result, generation of a wrinkle is restricted, illegibility of the printed contents in the printed area due to the wrinkle can be prevented, and visibility can be improved.

Fig. 30 is a diagram schematically illustrating an example (hereinafter referred to as "case 10") of a layered structure of a tag label tape 109J with print (base tape 101J). As shown in Fig. 30, the case 10 corresponds to the structure of the case 7 in Fig. 27, in which the base film 101g as the adhesive base is omitted, and the base tape 101J comprises the adhesive layer 101a, the adhesive layer 101c, and the detachable paper sheet 101d from the front side (upper side in Fig. 30), and the antenna base including the RFID circuit element To is provided to be held between the adhesive layer 101a and the adhesive layer 101c. And on the front side of the base tape 101J constructed as above, the cover film 103 is stuck through the adhesive layer 101a so that the tag label tape 109J with print is formed. In the construction of the case 10, the minimum value of the total thickness is 125 µm and the maximum value is 286 µm, as described below the table.

In this case, too, the adhesive layers 101c, 101a are provided adjacently to both sides of the detachable paper sheet side and the printed side of the antenna base, and the adhesive layers 101a, 101c are made as non-application type adhesive layers not requiring an adhesive base material. As mentioned above, in this type of adhesive layer, the dimension in the thickness direction of the entire label (tape) can be reduced. As a result, generation of a wrinkle is restricted, illegibility of the printed contents in the printed area due to the wrinkle can be prevented, and visibility can be improved.

### (2) If tapes are not bonded together:

That is, as described in the above example and the variation (1), this is a case where a cartridge is used for the tag label producing apparatus for direct printing on the cover film provided on the tag tape, not the laminated type that printing is applied on the cover film 103 different from the base tape 101 provided with the RFID circuit element To and they are bonded together.

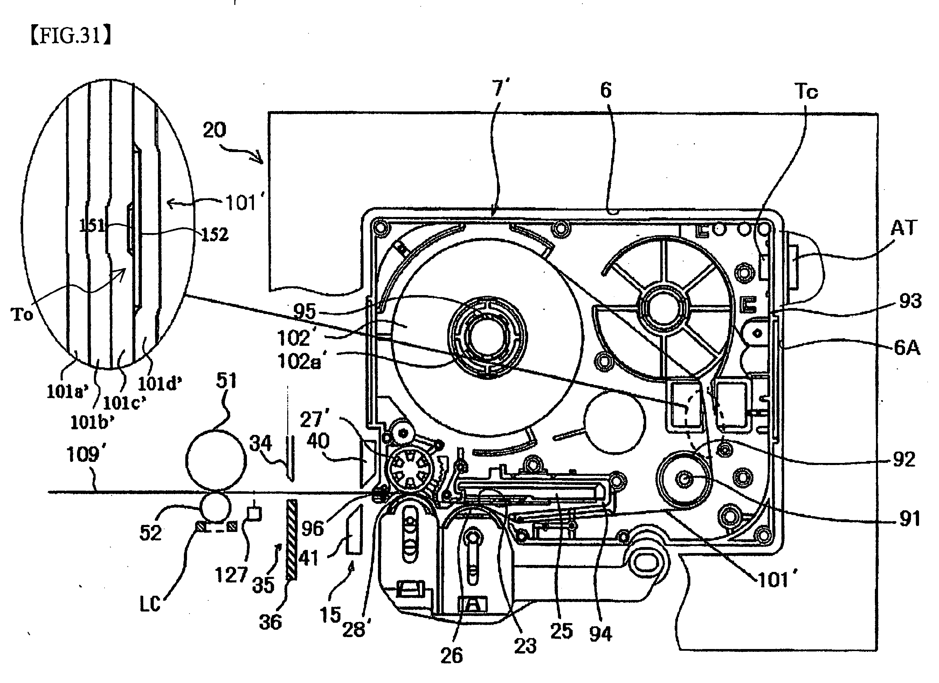

Fig. 31 is a plan view illustrating a detailed structure of a cartridge 7' of this variation and corresponds to the above-mentioned Fig. 5. The same reference numerals are given to the portions equivalent to those in Fig. 5 and the like and the description will be omitted as appropriate.

In Fig. 31, the cartridge 7' has a first roll 102' around which a thermal tape 101' is wound and a feeding roller 27' for feeding the thermal tape 101' in the direction outside the cartridge 7'.

The first roll 102' has the band-state transparent thermal tape 101' on which a plurality of the antenna base including the RFID circuit element To are sequentially formed in the longitudinal direction wound around a reel member 102a'. The reel member 102a' is rotatably fitted and stored in a boss 95 installed upright on the bottom surface of the cartridge 7'.

The thermal tape 101' wound around the first roll 102' is in the four-layered structure (except the antenna base) in this example (See an enlarged view in Fig. 31) in which a cover film (thermal cover film) 101a' made of polyethylene terephthalate (PET) and the like as the print-receiving tape layer having a thermal recording layer on the surface, a colored base film 101b' made of polyethylene terephthalate (PET) and the like, an adhesive layer 10lc' made of an appropriate adhesive, and a detachable paper sheet 101d' are laminated from the side wound inside (left side in Fig. 31) toward the opposite side (right side in Fig. 31).

On the back side of the cover film 101a' (right side in Fig. 31), the base film 101b' is laminated. Also, on the back side of this base film 101b', the detachable paper sheet 101d' is stuck through the adhesive layer 101c', and the antenna base including the RFID circuit element To comprised by the loop antenna 152 constructed in the loop-coil shape for transmission/receiving of information and the IC circuit part 151 is provided between the adhesive layer 101c' and the detachable paper sheet 101d'.

When the cartridge 7' is attached to the cartridge holder 6 and the roller holder 25 is moved from the separated position to the contact position, the thermal tape 101' is held between the printing head 23 and the platen roller 26 and between the feeding roller 27' and a sub roller 28'. And the feeding roller 27', the sub roller 28' and the platen roller 26 are rotated in synchronization, and the thermal tape 101' is fed out of the first roll 102'.

The fed-out thermal tape 101' supplied from an opening portion 94 to the printing head 23 on the downstream side in the conveying direction while being guided by the substantially cylindrical reel 92 rotatably fitted by insertion into a reel boss 91 installed upright on the cartridge bottom surface. The printing head 23 has its plurality of heating elements electrified by the above-mentioned printing drive circuit 120 (See Fig. 15), by which the label printing R is printed on the surface of the cover film 101a' of the thermal tape 101' and formed as the tag label tape 109' with print and then, conveyed out of the cartridge 7' from the discharge port 96.

After conveying out of the cartridge 7', an access (information reading/writing) of the IC circuit part 151 through the above-mentioned loop antenna LC is carried out. After that, it is only necessary to execute the conveyance by the feeding roller 51, cutting by the cutting mechanism 15 and the like similarly to the above embodiments, and the description will be omitted.

The half cut unit 35 is different from those corresponding to the so-called laminate type described in Fig. 10 and the like. That is, in the construction described in Fig. 10 and the like, the cradle 36 is located on the printing head 23 side, while the half cutter 34 is on the platen roller 26 side. This is the construction for carrying out half-cut from the surface opposite to the detachable paper sheet of the produced tape. However, when the thermal tape is used as in this variation (also when the ink ribbon is used in the type not using the laminate, which will be described later), the detachable paper sheet is located on the side opposite to that of the laminate type. Therefore, in order to apply the half-cut to a portion other than the detachable paper sheet, arrangement of the cradle 36 and the half cutter 34 is made opposite. That is, the half cutter 34 is located on the printing head 23 side, while the cradle 36 on the platen roller 26 side.

In this example, in order to enable automatic detection on the device side of cartridge type information and the like regarding the cartridge 7', an RFID circuit element Tc for cartridge storing the information on the cartridge 7' in advance is disposed on an outer peripheral wall surface 93 of the cartridge 7'. Also, on a side wall portion 6A opposite to the RFID circuit element Tc in the cartridge holder 6, an antenna AT is provided for transmission/receiving of a signal through non-contact wireless communication with the RFID circuit element Tc.

The most distinctive characteristic in the above basic construction (Fig. 31) is also that the adhesive layer is provided not adjacently to both sides (the printed side and the separation material layer side) in the label thickness direction of the antenna base including the RFID circuit element To but adjacently to one of them (as the adhesive layer 101c' in Fig. 31). The inventors have produced the tag label tape 109 with print (wireless tag label T) in various constructions with dimensions in the thickness direction of each layer as shown in Fig. 31 and after. Generation or rigidity of a wrinkle is examined for each and the minimum value and the maximum value (unit is µm) of the total thickness where generation of a wrinkle is restricted are obtained. The detail will be described below.

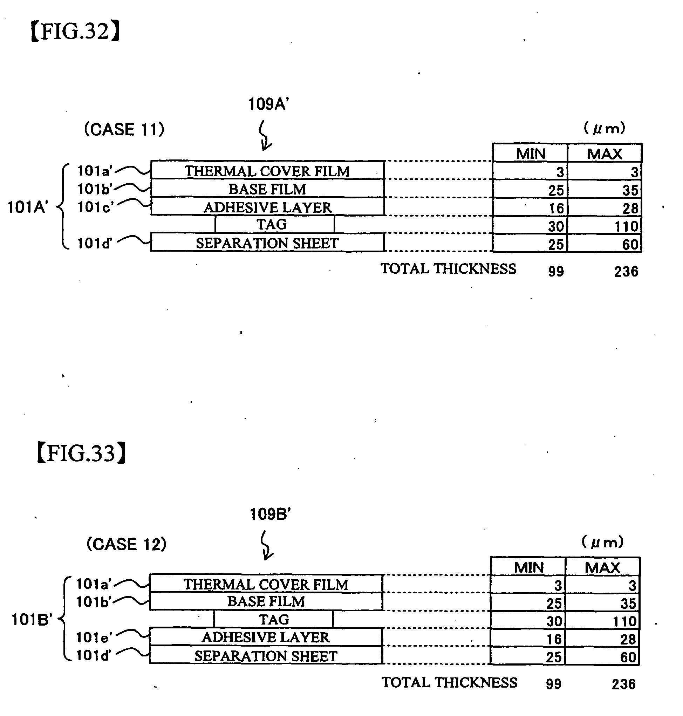

Fig. 32 is a diagram schematically illustrating an example (hereinafter referred to as a "case 11") of the layered structure of a tag label tape 109A' with print (base tape 101A'). As shown in Fig. 32, in the case 11, the base tape 101A' comprises the thermal cover film 101a', the base film 101b', the adhesive layer 101c', and a detachable paper sheet 101d' from the front side (upper side in Fig. 32), and the antenna base including the RFID circuit element To is provided to be held between the adhesive layer 101c' and the detachable paper sheet 101d'. In the construction of the case 11, the minimum value of the total thickness is 99 µm and the maximum value is 236 µm, as described below the table.

By providing the adhesive layer 101c' adjacently only to the printed side of the antenna base including the RFID circuit element To in this way, the dimension in the thickness direction of the entire label (tape) can be reduced as compared with the case of provision adjacent to the both sides. As a result, the generation of wrinkles can be restricted, illegibility of the printed contents is prevented and visibility can be improved. Also, the adhesive layers protruding from the outer edge portions in the width direction are not brought into contact or bonded together as in the case of provision of two or more adhesive layers. Also, the RFID circuit element To can be attached to the base film 101b' through the adhesive layer 101c' (fixation adhesive layer).

The construction of the case 11 corresponds to the layered structure of the base tape 101' used in the above variation (See Fig. 31) and the produced tag label tape 109' with print, and the dimension in the thickness direction of each layer of the base tape 101' and the tag label tape 109' with print (RFID label T) is set similar to that of the case 11.

Fig. 33 is a diagram schematically illustrating an example (hereinafter referred to as a "case 12") of the layered structure of a tag label tape 109B' with print (base tape 101B'). As shown in Fig. 33, in the case 12, the base tape 101B' comprises the thermal cover film 101a', the base film 101b', the adhesive layer 101e', and the detachable paper sheet 101d' from the front side (upper side in Fig. 33), and the antenna base including the RFID circuit element To is provided to be held between the base film 101b' and the adhesive layer 101e'. In the construction of the case 12, the minimum value of the total thickness is 99 µm and the maximum value is 236 µm, as described below the table (similar to the case 11).

By providing the adhesive layer 101e' adjacently only to the detachable paper sheet side of the antenna base including the RFID circuit element To in this way, the dimension in the thickness direction of the entire label (tape) can be reduced as compared with the case of provision adjacent to the both sides. As a result, the generation of wrinkles can be restricted, illegibility of the printed contents is prevented and visibility can be improved. Also, the adhesive layers protruding from the outer edge portions in the width direction are not brought into contact or bonded together as in the case of provision of two or more adhesive layers.

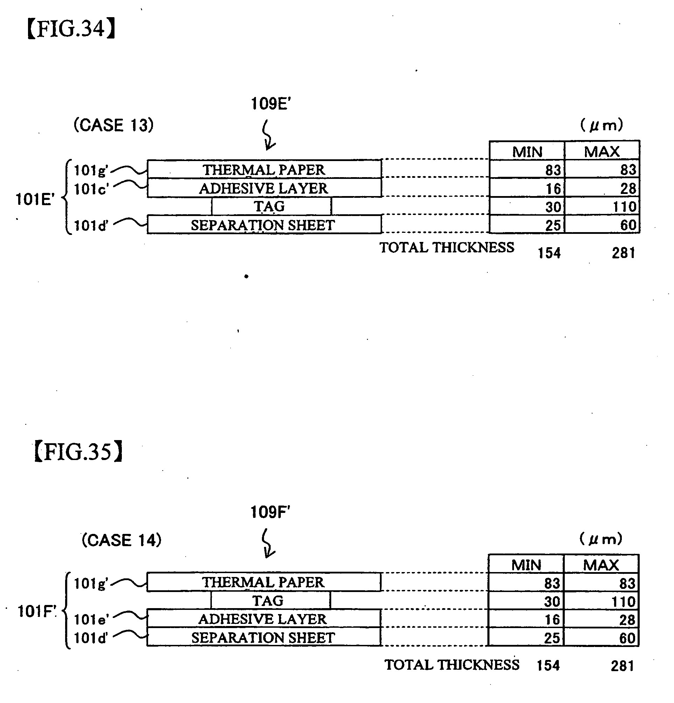

Fig. 34 is a diagram schematically illustrating an example (hereinafter referred to as a "case 13") of the layered structure of a tag label tape 109E' with print (base tape 101E'). In the case 13, a thermal paper is used instead of the thermal cover film and the base film in the above variation, but the construction is basically the same as that of the case 11. As shown in Fig. 34, in the case 13, the base tape 101E' comprises the thermal paper 101g', the adhesive layer 101c', and the detachable paper sheet 101d' from the front side (upper side in Fig. 34), and the antenna base including the RFID circuit element To is provided to be held between the adhesive layer 101c' and the detachable paper sheet 101d'. In the construction of the case 13, the minimum value of the total thickness is 154 µm and the maximum value is 281 µm, as described below the table. The same effect as above can be also obtained by this case 13.

Fig. 35 is a diagram schematically illustrating an example (hereinafter referred to as a "case 14") of the layered structure of a tag label tape 109F' with print (base tape 101F'). In the case 14, a thermal paper is used instead of the thermal cover film and the base film in the above variation, but the construction is basically the same as that of the case 12. As shown in Fig. 35, in the case 14, the base tape 101F' comprises the thermal paper 101g', the adhesive layer 101e', and the detachable paper sheet 101d' from the front side (upper side in Fig. 35), and the antenna base including the RFID circuit element To is provided to be held between the thermal paper 101g' and the adhesive layer 101e'. In the construction of the case 14, the minimum value of the total thickness is 154 µm and the maximum value is 281 µm, as described below the table (similar to the case 13). The same effect as above can be also obtained by this case 14.

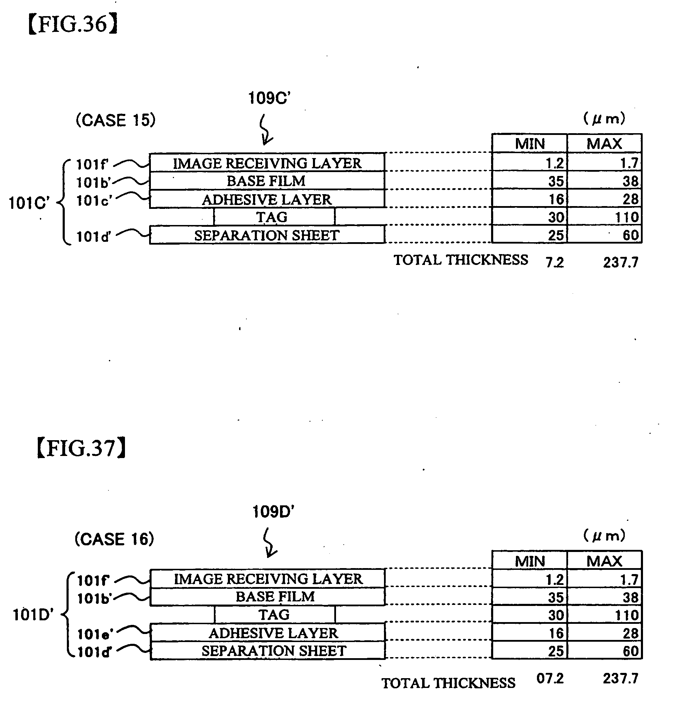

Fig. 36 is a diagram schematically illustrating an example (hereinafter referred to as a "case 15") of the layered structure of a tag label tape 109C' with print (base tape 101C'). In the case 15, instead of the thermal cover film in the above variation, an image receiving layer 101f' is provided using a printing method by ink such as an ink ribbon. In this case, in the construction shown in the above-mentioned Fig. 31, the same ink ribbon as in Fig. 5 is added and when the plurality of heating elements of the printing head 23 are electrified, printing R is printed on the surface of the image receiving layer 101f' (the surface opposite to the separation material layer 101d') and formed as the tag label tape 109' with print and then, conveyed out of the cartridge 7' from the discharge port 96. As shown in Fig. 36 in the case 15 the base tape 101C' comprises the image receiving layer 101f', the base film 101b', the adhesive layer 101c', and the detachable paper sheet 101d' from the front side (upper side in Fig. 36), and the antenna base including the RFID circuit element To is provided to be held between the adhesive layer 101c' and the detachable paper sheet 101d'. In the construction of the case 15, the minimum value of the total thickness is 107.2 µm and the maximum value is 237.7 µm, as described below the table. The same effect as above can be also obtained by this case 15.

Fig. 37 is a diagram schematically illustrating an example (hereinafter referred to as a "case 16") of the layered structure of a tag label tape 109D' with print (base tape 101D'). In the case 16, the base tape 101D' comprises the image receiving layer 101f', the base film 101b', the adhesive layer 101e', and the detachable paper sheet 101d' from the front side (upper side in Fig. 37), and the antenna base including the RFID circuit element To is provided to be held between the base film 101b' and the adhesive layer 101e'. In the construction of the case 16, the minimum value of the total thickness is 107.2 µm and the maximum value is 237.7 µm, as described below the table (similar to the case 15). The same effect as above can be also obtained by this case 16.

### (3) Others

In one embodiment of the present invention described above, a loop antenna is used as the antenna LC on the device side and the antenna 152 on the RFID circuit element To side, and information transmission is carried out by magnetic induction (including electromagnetic induction, magnetic coupling and other non-contact induction through a magnetic field), but not limited to this, a dipole antenna, a patch antenna or the like may be used as transmission/receiving means as the above two antennas so as to carry out information transmission/receiving by wave communication.

Also, in the above, such a case was used for description that the tag label tape with prints 109, 109' to which printing and an access to the RFID circuit element To (reading or writing) have been finished is cut so as to create the tag label T, but not limited to this. That is, if a label mount separated in advance to a predetermined size corresponding to the label (so-called die-cut label) is continuously arranged on a tape fed out of the roll, there is no need to cut it but after the tape is discharged from the label discharge port, only the label mount (provided with the RFID circuit element To having been accessed and printed accordingly) may be separated from the tape so as to create the tag label T, and the present invention can be also applied to the above.

Also, the present invention is not limited to those in which the RFID tag information is read/written with respect to the IC circuit part 151 of the RFID circuit element To and printing is made by the printing head 23 for identifying the RFID tag circuit element To. The printing does not necessarily have to be performed but the present invention may be applied to those for reading or writing of the RFID tag information.

Moreover, in the above, a case was described that the base tapes 101, 101' constitute the first rolls 102, 102' and the rolls are arranged inside the cartridges 7, 7', but not limited to this. For example, a lengthy flat paper-state or a strip-state tape or sheet on which at least one antenna base including RFID circuit element To is arranged (including those formed by cutting to an appropriate length after the tape wound around the roll has been fed out) is stacked in a predetermined storing portion (in the flat laminated state on a tray or the like, for example) to be made into a cartridge, and this cartridge may be attached in the cartridge holder on the tag label producing apparatus side so that it is transferred and conveyed from the storing portion for printing and writing so as to produce the tag label.

Moreover, there can be a construction that the roll is directly and detachably attached to the tag label producing apparatus side or a construction that a lengthy flat paper-or a strip-state tape or sheet is transferred one by one from outside the tag label producing apparatus into the tag label producing apparatus by a predetermined feeder mechanism. Furthermore, not limited to those such as the cartridge 7 detachably attached to the tag label creating device body, but the first rolls 102, 102' may be provided at the device body side as an installed type or an integral type that can not be detached. The same effect can be also obtained in these cases.

Also, other than mentioned above, the above embodiments and methods of each of the variations may be combined for use as appropriate.

Though not specifically exemplified, the present invention should be put into practice with various changes made in a range not departing from the scope of the appended claims.

## Claims

1. An RFID label comprising:
a separation material layer (101d) provided on an affixing side of the label (T) when viewed in the thickness direction;
a print-receiving tape layer (103) provided on a side opposite to the affixing side of the label (T) when viewed in the thickness direction and on which desired printing is applied; and
a substantially sheet-state antenna base disposed at an intermediate portion in the thickness direction between said print-receiving tape layer (103) and said separation material layer (101d) and on which an RFID circuit element (To) having an IC circuit part (151) that stores information and a tag antenna (152) for transmitting/receiving information is arranged;
a first intermediate base layer (101b) disposed at an intermediate portion between said print-receiving tape layer (103) and said antenna base in the label thickness direction;
a bonding adhesive layer (101a) for bonding said first intermediate base layer (101b) and said print-receiving tape layer (103) together;
a second intermediate base layer (101g) disposed at an intermediate portion between said antenna base and said separation material layer (101d) in the label thickness direction;
an affixing adhesive layer (101c) disposed between said second intermediate base layer (101g) and said separation material layer (101d);and
an adhesive layer (101e; 101h) for the antenna base arranged adjacently thereto with the antenna base provided to be held either
(a) between the adhesive layer (101e) for the antenna base and the second intermediate base layer (101g), or
(b) between the adhesive layer (101h) for the antenna base and the first intermediate base layer (101b),
wherein
said antenna base is provided at an intermediate portion between said first intermediate base layer (101b) and said second intermediate base layer (101g) in the label thickness direction.

2. The RFID label according to Claim 1, **characterized in that**:
said print-receiving tape layer (103) has desired printing on the surface of the antenna base side.

3. The RFID label according to Claim 1 or 2, **characterized in that**:
said print-receiving tape layer has desired printing on the surface opposite to the antenna base side.

4. A tag tape roll (102) comprising a tag tape (101) in which the layers as defined in claim 1 are present, for constructing the RFID label (T) according to claim 1, **characterized in that**:
said tag tape (101) winds around an axis crossing the tape longitudinal direction.

5. An RFID circuit element cartridge (7) comprising the tag tape roll (102) according to claim 4, **characterized in that**:
said RFID circuit element cartridge (7) is configured to be detachably attached to a tag label producing apparatus (1).

## Patentansprüche

1. Eine RFID-Etikette, umfassend:
eine Trenn-Materialschicht (101d), die auf einer Anbringseite des Etiketts (T) vorgesehen ist, wenn dies in der Dickerichtung betrachtet wird;
eine druckaufnehmende Bandschicht (103), die auf einer Seite entgegengesetzt zur Anbringseite des Etiketts (T) vorgesehen ist, wenn dies in der Dickerichtung betrachtet wird, und auf welcher ein gewünschtes Drucken ausgeführt wird; und
eine im Wesentlichen folienbahnförmige Antennenbasis, die in einem mittleren Abschnitt in der Dickerichtung zwischen der druckaufnehmenden Bandschicht (103) und der Trenn-Materialschicht (101d) angeordnet ist, und auf welcher ein RFID-Schaltkreiselement (To) mit einem integrierten Schaltkreisteil (151), das Informationen speichert, und einer Tag-Antenne (152) zum Übertragen/Empfangen von Informationen angeordnet ist;
eine erste Zwischenbasisschicht (101b), die in einem mittleren Abschnitt zwischen der druckaufnehmenden Bandschicht (103) und der Antennenbasis in der Etikettendickerichtung angeordnet ist;
eine Verbindungs-Klebeschicht (101a) zum Zusammenkleben der ersten Zwischenbasisschicht (101b) und der druckaufnehmenden Bandschicht (103);
eine zweite Zwischenbasisschicht (101g), die in einem mittleren Abschnitt zwischen der Antennenbasis und der Trenn-Materialschicht (101d) in der Etikettendickerichtung angeordnet ist;
eine Befestigungs-Klebeschicht (101c), die zwischen der zweiten Zwischenbasisschicht (101g) und der Trenn-Materialschicht (101d) angeordnet ist; und
eine Klebeschicht (101e; 101h) für die Antennenbasis, die daran angrenzend angeordnet ist, wobei die Antennenbasis so vorgesehen ist, dass sie entweder
(a) zwischen der Klebeschicht (101e) für die Antennenbasis und die zweite Zwischenbasisschicht (101g),oder
(b) zwischen der Klebeschicht (101h) für die Antennenbasis und die erste Zwischenbasisschicht (101b),
gehalten ist, wobei
die Antennenbasis in einem mittleren Abschnitt zwischen der ersten Zwischenbasisschicht (101b) und der zweiten Zwischenbasisschicht (101g) in der Etikettendickerichtung vorgesehen ist.

2. Die RFID-Etikette gemäß Anspruch 1, **dadurch gekennzeichnet, dass**:
die druckaufnehmende Bandschicht (103) ein gewünschtes Drucken auf der Oberfläche auf der Seite der Antennenbasis besitzt.

3. Die RFID-Etikette gemäß Anspruch 1 oder 2, **dadurch gekennzeichnet, dass**:
die druckaufnehmende Bandschicht ein gewünschtes Drucken auf der Oberfläche entgegengesetzt zur Seite der Antennenbasis besitzt.

4. Eine Tag-Bandrolle (102), umfassend ein Tag-Band (101), bei welchem die Schichten, wie in Anspruch 1 definiert, vorliegen, zum Aufbauen der RFID-Etikette (T) gemäß Anspruch 1, **dadurch gekennzeichnet, dass**:
das Tag-Band (101) um eine Achse gewunden ist, welche die Bandlängsrichtung schneidet.

5. Eine RFID-Schaltkreiselementkariusche (7), umfassend die Tag-Bandrolle (102) gemäß Anspruch 4, **dadurch gekennzeichnet, dass**:
die RFID-Schaltkreiselementkartusche (7) eingerichtet ist, entfernbar in einem Tag-Etiketten-Herstellungsgerät (1) angebracht zu werden.

## Revendications

1. Etiquette RFID comprenant :
une couche de matériau de séparation (101d) prévue d'un côté d'apposition de l'étiquette (T) lorsqu'elle est vue dans la direction d'épaisseur ;
une couche de bande de réception d'impression (103) prévue d'un côté opposé au côté d'apposition de l'étiquette (T) lorsqu'elle est vue dans la direction d'épaisseur et sur laquelle une impression souhaitée est appliquée ; et
une base d'antenne sensiblement dans l'état de feuille disposée au niveau d'une partie intermédiaire dans la direction d'épaisseur entre ladite couche de bande de réception d'impression (103) et ladite couche de matériau de séparation (101d) et sur laquelle un élément de circuit RFID (To) comportant une partie de circuit intégré (151) qui mémorise des informations et une antenne d'étiquette (152) pour émettre/recevoir des informations est agencé ;
une première couche de base intermédiaire (101b) disposée au niveau d'une partie intermédiaire entre ladite couche de bande de réception d'impression (103) et ladite base d'antenne dans la direction d'épaisseur de l'étiquette ;
une couche adhésive de liaison (101a) pour lier ladite première couche de base intermédiaire (101b) et ladite couche de bande de réception d'impression (103) l'une à l'autre ;
une deuxième couche de base intermédiaire (101g) disposée au niveau d'une partie intermédiaire entre ladite base d'antenne et ladite couche de matériau de séparation (101d) dans la direction d'épaisseur de l'étiquette ;
une couche adhésive d'apposition (101c) disposée entre ladite deuxième couche de base intermédiaire (101g) et ladite couche de matériau de séparation (101d) ; et
une couche adhésive (101e; 101h) pour la base d'antenne agencée de manière adjacente à celle-ci, la base d'antenne étant prévue pour être maintenue soit
(a) entre la couche adhésive (101e) pour la base d'antenne et la deuxième couche de base intermédiaire (101g), ou
(b) entre la couche adhésive (101h) pour la base d'antenne et la première couche de base intermédiaire (101b),
dans laquelle
ladite base d'antenne est prévue au niveau d'une partie intermédiaire entre ladite première couche de base intermédiaire (101b) et ladite deuxième couche de base intermédiaire (101g) dans la direction d'épaisseur de l'étiquette.

2. Etiquette RFID selon la revendication 1, **caractérisée en ce que** :
ladite couche de bande de réception d'impression (103) comporte une impression souhaitée sur la surface du côté de base d'antenne.

3. Etiquette RFID selon la revendication 1 ou 2, **caractérisée en ce que** :
ladite couche de bande de réception d'impression comporte une impression souhaitée sur la surface à l'opposé du côté de base d'antenne.

4. Rouleau de bande d'étiquettes (102) comprenant une bande d'étiquettes (101) dans laquelle les couches telles que définies dans la revendication 1 sont présentes, pour réaliser l'étiquette RFID (T) selon la revendication 1, **caractérisé en ce que** :
ladite bande d'étiquettes (101) s'enroule autour d'un axe croisant la direction longitudinale de la bande.

5. Cartouche d'élément de circuit RFID (7) comprenant le rouleau de bande d'étiquettes (102) selon la revendication 4, **caractérisée en ce que** :
ladite cartouche d'élément de circuit RFID (7) est configurée pour être fixée de manière détachable à un dispositif de production d'étiquette.
